(19) Europäisches Patentamt

European Patent Office

Office européen des brevets

(11) **EP 4 746 544 A1**

(12) **EUROPEAN PATENT APPLICATION**
published in accordance with Art. 153(4) EPC

(43) Date of publication:
**20.05.2026 Bulletin 2026/21**

(21) Application number: **23944710.5**

(22) Date of filing: **12.07.2023**

(51) International Patent Classification (IPC):
***H04W 64/00*** (2009.01)

(52) Cooperative Patent Classification (CPC):
**H04W 64/00**

(86) International application number:
**PCT/CN2023/107094**

(87) International publication number:
**WO 2025/010690 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **XU, Jing**
  **Dongguan, Guangdong 523860 (CN)**
• **LIANG, Bin**
  **Dongguan, Guangdong 523860 (CN)**

(74) Representative: **Novagraaf Technologies
2 rue Sarah Bernhardt
CS90017
92665 Asnières-sur-Seine Cedex (FR)**

(54) **SENSING INFORMATION FEEDBACK METHOD AND APPARATUS, AND DEVICE AND
STORAGE MEDIUM**

(57)    The present application relates to the technical field of sensing. Disclosed are a sensing information feedback method and apparatus, and a device and a storage medium. The method is executed by a first node, and the method comprises: sending sensing information, wherein the sensing information comprises phase information. Sensing information which comprises phase information is sent, such that the accuracy of sensing a micro-motion is improved by means of the sensitivity of phase to displacement.

Transmitting sensing information, wherein the sensing
information includes phase information
— 220

FIG. 8

EP 4 746 544 A1

**Description**

**TECHNICAL FIELD**

Embodiments of the present disclosure relate to the field of sensing technologies, and in particular, to a method and apparatus for feeding back sensing information, and a device and a storage medium thereof.

**RELATED ART**

Sensing refers to a technology of detecting a parameter of a physical environment using an electromagnetic wave (including a light wave) and/or an acoustic wave to achieve environmental sensing such as target positioning, action recognition, or imaging. For example, in a sensing scenario of target positioning, a sensing node positions a sensing target by transmitting and receiving a wireless signal.

In some practices, a sensing method for positioning is to acquire a measured distance based on a time difference of propagation of a wireless signal. That is, the measured distance is determined based on a difference between a transmission time and a reception time of the wireless signal. In this method, a resolution of the measured distance is positively correlated with a bandwidth. That is, the higher the bandwidth, the higher the resolution of the measured distance.

For micro-motions, due to their small motion amplitude, the method for determining the measured distance based on the time difference of propagation the wireless signal needs an extremely high bandwidth, such that an overhead for transmitting a sensing signal during a sensing process is high. Thus, how to reduce the overhead of the sensing signal is a problem that needs to be resolved.

**SUMMARY**

Embodiments of the present disclosure provide a method and apparatus for feeding back sensing information, and a device and a storage medium thereof. The technical solutions are as follows.

According to some embodiments of the present disclosure, a method for feeding back sensing information is provided. The method is performed by a first node. The method includes:
transmitting sensing information, wherein the sensing information includes phase information.

According to some embodiments of the present disclosure, a method for feeding back sensing information is provided. The method is performed by a second node. The method includes:
receiving sensing information, wherein the sensing information includes phase information.

According to some embodiments of the present disclosure, an apparatus for feeding back sensing information is provided. The apparatus includes:
a transmitting module, configured to transmit sensing information, wherein the sensing information includes phase information.

According to some embodiments of the present disclosure, an apparatus for feeding back sensing information is provided. The apparatus includes:
a receiving module, configured to receive sensing information, wherein the sensing information includes phase information.

According to some embodiments of the present disclosure, a sensing device is provided. The sensing device includes:
a transceiver, configured to transmit sensing information, wherein the sensing information includes phase information.

According to some embodiments of the present disclosure, a sensing device is provided. The sensing device includes:
a transceiver, configured to receive sensing information, wherein the sensing information includes phase information.

According to some embodiments of the present disclosure, a computer-readable storage medium is provided. The computer-readable storage medium stores one or more computer programs. The one or more computer programs, when loaded and run by a processor, cause the processor to perform the method for feeding back sensing information described above.

According to some embodiments of the present disclosure, a chip is provided. The chip includes programmable logic circuitry and/or one or more program instructions. The chip, when running, is caused to perform the method for feeding back sensing information described above.

According to some embodiments of the present disclosure, a computer program product or a computer program is provided. The computer program product or the computer program includes one or more computer instructions stored in a computer-readable storage medium. The one or more computer instructions, when read from the computer-readable storage medium and executed by a processor, cause the processor to perform the method for feeding back sensing information described above.

The technical solutions according to the embodiments of the present disclosure achieve the following beneficial effects.

By transmitting the sensing information including the phase information to the second node, the sensitivity of the phase to the micro-motion is utilized, such that the problem that it is difficult to sense the energy and amplitude of the micro-motion is resolved, and the accuracy of the sensing result is improved. Thus, the sensing of the micro-motion does not depend on a large bandwidth, the overhead of the sensing signal is reduced, and the sensing efficiency is improved.

## BRIEF DESCRIPTION OF THE DRAWINGS

To describe the technical solutions in the embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.

FIG. 1 illustrates a schematic diagram of different sensing modes;
FIG. 2 illustrates a schematic diagram of different methods of a sensing procedure;
FIG. 3 illustrates a schematic diagram of different methods of a sensing procedure;
FIG. 4 illustrates a schematic diagram of a sensing method for positioning in some practices;
FIG. 5 illustrates a schematic diagram of a sensing method for positioning in some practices;
FIG. 6 illustrates a schematic diagram of a sensing method for positioning in some practices;
FIG. 7 illustrates a block diagram of a sensing system according to some embodiments of the present disclosure;
FIG. 8 illustrates a flowchart of a feedback method for a sensing system according to some embodiments of the present disclosure;
FIG. 9 illustrates a flowchart of a feedback method for a sensing system according to some embodiments of the present disclosure;
FIG. 10 illustrates a phase-time variation diagram according to some embodiments of the present disclosure;
FIG. 11 illustrates a phase-time variation diagram according to some embodiments of the present disclosure;
FIG. 12 illustrates a flowchart of a feedback method for a sensing system according to some embodiments of the present disclosure;
FIG. 13 illustrates a structural block diagram of a feedback apparatus for a sensing system according to some embodiments of the present disclosure;
FIG. 14 illustrates a structural block diagram of a feedback apparatus for a sensing system according to some embodiments of the present disclosure; and
FIG. 15 illustrates a schematic structural diagram of a sensing device according to some embodiments of the present disclosure.

## DETAILED DESCRIPTION

For clearer descriptions of the objectives, technical solutions, and advantages of the present disclosure, the embodiments of the present disclosure are further described in detail hereinafter with reference to the accompanying drawings.

The network architecture and business scenarios described in the embodiments of the present disclosure are intended to describe the technical solutions according to the embodiments of the present disclosure more clearly, but do not constitute a limitation on the technical solutions according to the embodiments of the present disclosure. Those of ordinary skill in the art learn that, with the evolution of the network architecture and the emergence of new business scenarios, the technical solutions according to the embodiments of the present disclosure are also applicable to similar technical problems.

Sensing refers to a technology of detecting a parameter of a physical environment using an electromagnetic wave (including a light wave) and/or an acoustic wave to achieve environmental sensing such as target positioning, action recognition, or imaging. The nodes participating in sensing are as follows:

- a sensing transmitter node: a transmitter node of a sensing signal;
- a sensing receiver node: a receiver node of a sensing signal;
- a sensing node: the sensing transmitter node and the sensing receiver node are collectively referred to as a sensing node, that is, a node that performs sensing;
- a sensing manager node: a node that manages and controls a sensing task, wherein the sensing manager node configures a sensing task for the sensing node, and the sensing node feeds back a sensing result to the sensing manager node upon performing sensing; and

- a sensing trigger node: a node that initiates sensing, sets configuration of a sensing scenario, and parses sensing feedback transmitted by a sensing node.

In the technical development trend where the frequency spectrum of wireless communication gradually overlaps the frequency spectrum of sensing, the integrated sensing and communication technology combines wireless communication and sensing, such that wireless resources of the wireless communication may be used to achieve sensing functions (that is, a widely deployed cellular network is used to achieve the sensing service in a larger region), and joint sensing may be performed using a base station and a plurality of terminals to achieve higher sensing precision, and a hardware module for wireless communication may be shared to achieve the sensing function to reduce costs. In summary, the integrated sensing and communication technology enables the future wireless communication system to have a sensing capability, and thus provides a basis for the development of services such as intelligent transportation systems, smart cities, smart factories, and unmanned aerial vehicles in the future.

The sensing service and the sensing task may have the same meaning or different meanings. In the case of different meanings, the sensing service may be considered as a generic concept of sensing tasks of the same type, or may be understood in other ways, which is not limited in the embodiments of the present disclosure. For the sensing service/task, only one parameter is sensed, or a combination of a plurality of parameters is sensed,. The parameter is at least one of: a speed, a delay, a distance, or an energy.

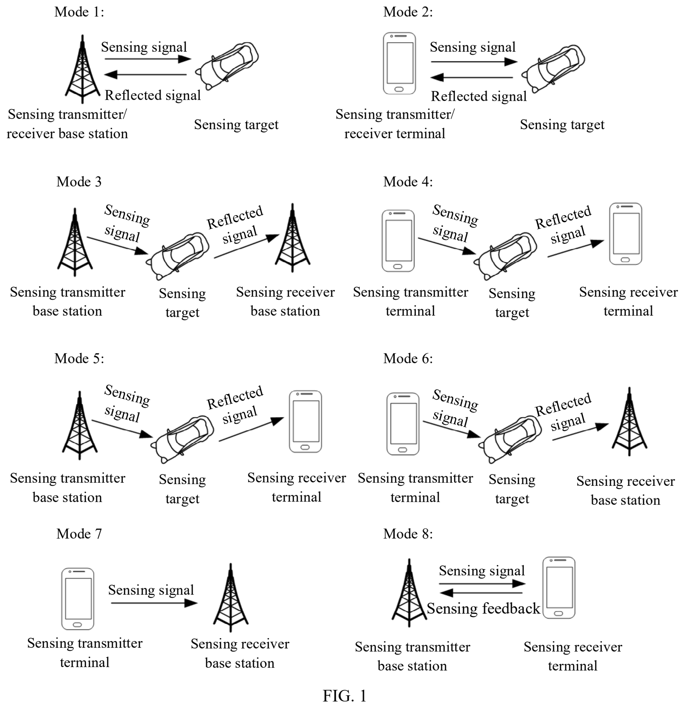

The sensing may be achieved via at least one of eight modes. FIG. 1 illustrates the eight modes of sensing.

Mode 1: base station self-transmitting and self-receiving sensing. In Mode 1, the sensing transmitter node and the sensing receiver node are the same base station. That is, the base station transmits a sensing signal to a sensing target; and the sensing signal is reflected by the sensing target, and then the same base station receives the reflected signal (that is, the sensing signal reflected by the sensing target).

Mode 2: terminal self-transmitting and self-receiving sensing. In Mode 2, the sensing transmitter node and the sensing receiver node are the same terminal. That is, the terminal transmits a sensing signal to a sensing target; and the sensing signal is reflected by the sensing target, and then the same terminal receives the reflected signal.

Mode 3: station-cooperative sensing. In Mode 3, the sensing transmitter node and the sensing receiver node are different base stations. That is, a base station transmits a sensing signal to a sensing target; and the sensing signal is reflected by the sensing target, and then another base station receives the reflected signal.

Mode 4: terminal-cooperative sensing. In Mode 4, the sensing transmitter node and the sensing receiver node are different terminals. That is, a terminal transmits a sensing signal to a sensing target; and the sensing signal is reflected by the sensing target, and then another terminal receives the reflected signal.

Mode 5: Base station-terminal-cooperative sensing. In Mode 5, the sensing transmitter node is a base station, and the sensing receiver node is a terminal. That is, the base station transmits a sensing signal to a sensing target; and the sensing signal is reflected by the sensing target, and then the terminal receives the reflected signal.

Mode 6: terminal-base station-cooperative sensing. In Mode 6, the sensing transmitter node is a terminal, and the sensing receiver node is a base station. That is, the terminal transmits a sensing signal to a sensing target; and the sensing signal is reflected by the sensing target, and then the base station receives the reflected signal.

Mode 7: the sensing target is a sensing transmitter node. In Mode 7, the sensing transmitter node is a terminal, and the sensing receiver node is a base station. Since the sensing target (the terminal) is the sensing transmitter node, the sensing signal is transmitted by the sensing transmitter node (the terminal) to the sensing receiver node (the base station) and does not need to be reflected, and the base station receives the sensing signal and then directly parses the sensing result.

Mode 8: the sensing target is a sensing receiver node. In Mode 8, the sensing transmitter node is a base station, and the sensing receiver node is a terminal. Since the sensing target (the terminal) is the sensing receiver node, the terminal needs to feed back the sensing result to the base station upon receiving the sensing signal, such that the base station knows the sensing result.

In the eight sensing modes illustrated in FIG. 1, a single sensing node (for example, in Modes 1 and 2, the single node is both a sensing transmitter node and a sensing receiver node) or paired sensing nodes (for example, in Modes 3 to 8, the sensing transmitter node and the sensing receiver node are different paired nodes) is present. However, in a wireless communication system, a large number of terminal devices (for example, mobile phones, Internet of Things (IoT) devices, and the like) are present. In the case where there is a plurality of sensing nodes (i.e., base stations, mobile phones, IoT devices, and the like that can transmit and/or receive sensing signals) around a sensing target, the joint sensing of the plurality of sensing nodes may improve the accuracy of sensing, satisfy more complex sensing service requirements, and provide more diverse sensing services. In the case where a plurality of sensing nodes are present in the system, a sensing manager node may be present to control and manage the entire sensing system to improve the efficiency. The sensing manager node may be a base station, a terminal, or a core network element.

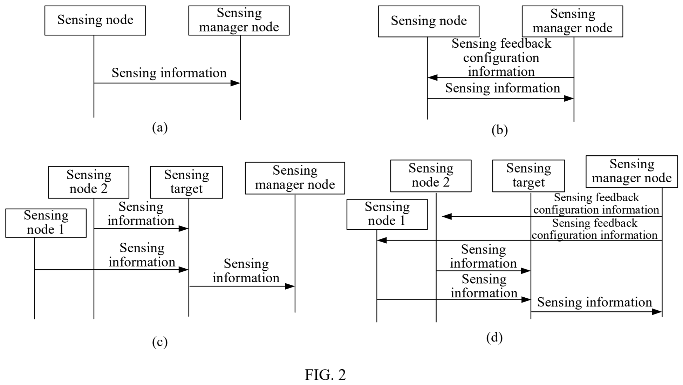

Referring to FIG. 2, FIG. 2 illustrates three schematic processes of sensing.

Process 1: as illustrated in FIGS. 2(a) and 2(b), the sensing node transmits sensing information to the sensing manager node. The sensing manager node may be an independent entity, and the sensing manager node may configure and/or trigger transmission/reception of the sensing signal. That is, the sensing manager node may configure and/or trigger a measurement process that uses the sensing signal.

FIG. 2(a) illustrates that the sensing node transmits the sensing information to the sensing manager node. FIG. 2(b) illustrates that the sensing node transmits the sensing information to the sensing manager node upon receiving the sensing feedback configuration information from the sensing manager node.

Process 2: as illustrated in FIGS. 2(c) and 2(d), the sensing node needs to first transmit the sensing information to the sensing target, and then the sensing target transmits the sensing information to the sensing manager node. There may be one or more sensing nodes.

FIG. 2(c) illustrates that sensing node 1 and sensing node 2 each transmit the sensing information to the sensing target, and then the sensing target transmits the sensing information to the sensing manager node. FIG. 2(d) illustrates that the sensing manager node transmits sensing feedback configuration information to sensing node 1 and sensing node 2 to configure the sensing signal; sensing node 1 and sensing node 2 each transmit the sensing information to the sensing target upon receiving the sensing feedback configuration information from the sensing manager node, and then the sensing target transmits the sensing information to the sensing manager node.

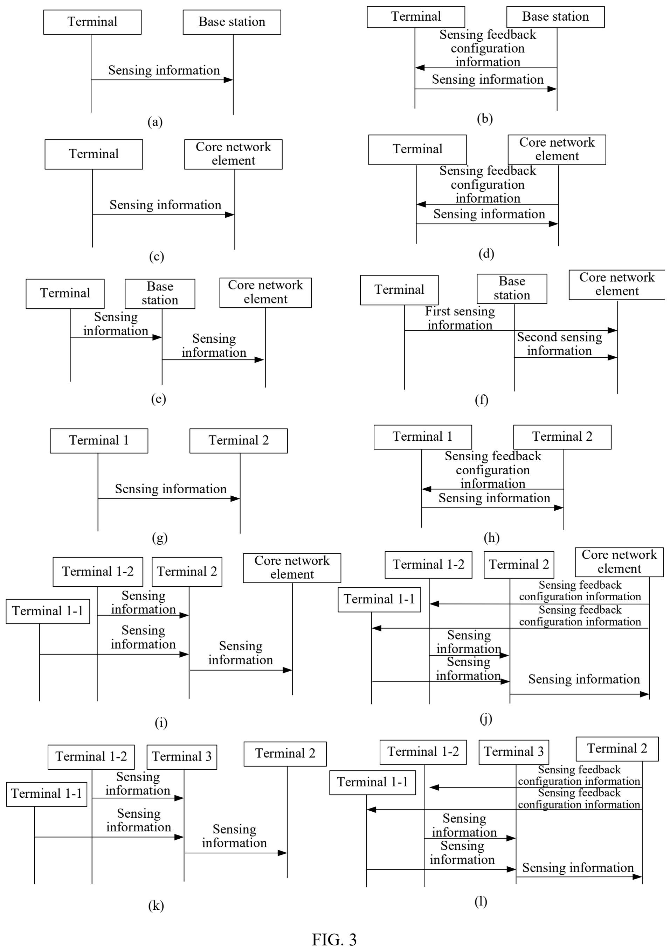

Referring to FIG. 3, FIG. 3 illustrates a sensing process from the perspectives of a terminal, a base station, and a core network element based on FIG. 2.

Method 1: as illustrated in FIGS. 3(a) and 3(b), the sensing node is a terminal, the sensing manager node is a base station, and the terminal transmits the sensing information to the base station.

FIG. 3(a) illustrates that the terminal transmits the sensing information to the base station. FIG. 3(b) illustrates that the terminal triggers and configures a sensing measurement upon receiving the sensing feedback configuration information from the base station, and transmits the sensing information to the base station.

Method 2: as illustrated in FIGS. 3(c) to 3(f), the sensing node is a terminal, the sensing manager node is a core network element, and the terminal transmits the sensing information to the core network element.

FIG. 3(c) illustrates that the terminal transmits the sensing information to the core network element. FIG. 3(d) illustrates that the terminal triggers and configures a sensing measurement upon receiving the sensing feedback configuration information from the core network element, and transmits the sensing information to the core network element. FIG. 3(e) illustrates that the terminal transmits the sensing information to the base station, and then the base station transmits the sensing information to the core network element. FIG. 3(f) illustrates that the terminal transmits first sensing information to the core network element, and the base station transmits second sensing information to the core network element.

Method 3: as illustrated in FIGS. 3(G) and 3(h), both the sensing node and the sensing manager node are terminals. Using an example where the sensing node is terminal 1 and the sensing manager node is terminal 2, terminal 1 transmits the sensing information to terminal 2.

FIG. 3(g) illustrates that the terminal transmits the sensing information to terminal 2. FIG. 3(h) illustrates that terminal 1 triggers and configures a sensing measurement upon receiving the sensing feedback configuration information from terminal 2, and transmits the sensing information to terminal 2.

Method 4: as illustrated in FIGS. 3(i) and 3(j), the sensing node is terminal 1, the sensing manager node is a core network element, and the sensing target is terminal 2. Terminal 1 transmits the sensing information to terminal 2, and terminal 2 transmits the sensing information to the core network element.

There may be a plurality of sensing nodes. Using terminal 1-1 and terminal 1-2 as an example, FIG. 3(i) illustrates that terminal 1-1 and terminal 1-2 each transmit the sensing information to terminal 2, and terminal 2 transmits the sensing information to the core network element. FIG. 3(j) illustrates that the core network element transmits the sensing feedback configuration information to terminal 1-1 and terminal 1-2 and triggers and configures a sensing measurement, terminal 1-1 and terminal 1-2 each transmit the sensing information to terminal 2, and terminal 2 transmits the sensing information to the core network element.

Method 5: as illustrated in FIGS. 3(k) and 3(l), the sensing node is terminal 1, the sensing manager node is terminal 2, and the sensing target is terminal 3. Terminal 1 transmits the sensing information to terminal 3 via a sidelink, and terminal 3 transmits the received sensing information to terminal 2.

There may be a plurality of sensing nodes. Using terminal 1-1 and terminal 1-2 as an example, FIG. 3(k) illustrates that terminal 1-1 and terminal 1-2 each transmit the sensing information to terminal 3, and terminal 3 transmits the sensing information to terminal 2. FIG. 3(l) illustrates that terminal 2 transmits the sensing feedback configuration information to terminal 1-1 and terminal 1-2 and triggers and configures a sensing measurement, terminal 1-1 and terminal 1-2 each transmit the sensing information to terminal 3, and terminal 3 transmits the sensing information to terminal 2.

In addition, configuring the sensing node in the sensing procedures described above as the base station is also applicable to different methods of the sensing procedures described above. That is, in addition to the methods illustrated in FIG. 3, the sensing procedure further includes various methods in which the terminal in FIGS. 3(a) to 3(l) is replaced with a base station.

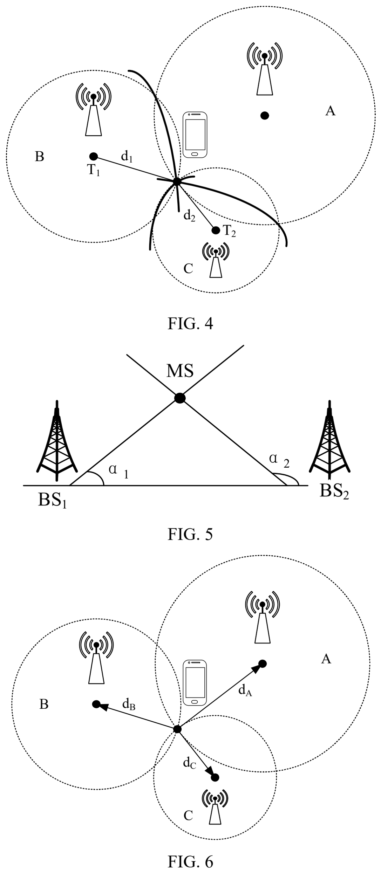

FIGS. 4 to 6 illustrate different sensing methods for positioning.

Referring to FIG. 4, FIG. 4 illustrates a schematic diagram of an uplink time difference of arrival (UTDOA) positioning method. In the method, a terminal transmits an uplink sounding reference signal (SRS) to a base station, and calculates a position of the terminal relative to the base station based on a time difference of arrival of the terminal at different base stations. Since a trajectory, whose distance to two fixed points is a constant, is a hyperbola, hyperbolas are acquired with the base stations as the foci and the distance difference determined based on the time difference as the major axis, and an intersection of the hyperbolas is the position of the terminal. In FIG. 4, using base station B and base station C as an example, the process of determining the position of the terminal is illustrated. The times when the SRS transmitted by the terminal reaches base station B and base station C are represented as $T_1$ and $T_2$, respectively. The distances between the terminal and the base stations are calculated and represented as $d_1$ and $d_2$, respectively. Then, hyperbolas are acquired with the distance difference between $d_1$ and $d_2$ as the major axis and base station B and base station C as the foci, and the acquired intersection of the hyperbolas is the position of the terminal. The UTDOA features a low requirement for the terminal, a simple process, and high industry maturity, and thus is one of the most widely used positioning technologies. The technology needs multi-station cooperative positioning and has a stringent requirement for inter-station synchronization, and thus is applicable to an indoor pico site scenario.

Referring to FIG. 5, FIG. 5 illustrates a schematic diagram of an angle of arrival (AOA) positioning method. In the positioning method, the positioning is performed based on an incident angle of a signal. In the case where only the AOA positioning method is available, the terminal positioning may be completed by two base stations. In FIG. 5, using an example where the terminal is a mobile station (MS), a position of the MS is determined based on incident angles $\alpha 1$ and $\alpha 2$ of signals transmitted by the MS to base station (BS) 1 and BS 2. However, in the AOA method, an antenna array with strong directivity needs to be equipped for the receiver (for example, the BS in FIG. 5) to accurately measure the incident angle of an electromagnetic wave (including a light wave) and/or an acoustic wave. The actual deployment imposes extremely high requirements on engineering conditions, in which the deployment position of the base station needs to be accurately recorded and the direction of the base station antenna array is strictly aligned to ensure the accuracy of incident angle measurement. In consideration of these strict engineering requirements, the AOA positioning algorithm has been explored, but has not been commercialized on a large scale. The technology has a high requirement for the number of antennas of the base station and is applicable to an outdoor macro base station scenario.

Referring to FIG. 6, FIG. 6 illustrates a schematic diagram of a round trip time (RTT) method. In the RTT method, a downlink positioning reference signal (PRS) and an uplink SRS are respectively measured to acquire RTTs between a positioned terminal and a plurality of base stations, such that the position of the terminal is determined. FIG. 6 illustrates that the distances $d_A$, $d_B$, and $d_C$ between base stations A, B, and C and the terminal are acquired through respective transmission of the PRS and the SRS between base stations A, B, and C and the terminal. Then, a circle is acquired with each base station as a center and the distance between the base station and the terminal as a radius, and an intersection of the plurality of circles is the position of the positioned terminal. The positioning method supports single-station and multi-station positioning. In the case where only a base station participates in the positioning, the RTT needs to be combined with the AOA. The RTT technology does not need strict synchronization between base stations and may be used indoors and outdoors.

For the UTDOA and the RTT, the measured distance is acquired based on the time difference of propagation of a wireless signal, that is, $d = c * t$. c represents a speed of light, that is, $3 * 10^8$ m/s, and t represents a difference between a transmission time and a reception time of the wireless signal and is generally acquired based on a delay of a first path (or the strongest path) of a time-domain channel. However, a resolution/sampling interval (Tc) of the time-domain signal is related to the system bandwidth (BW), that is, $Tc = 1/2 * BW$. Therefore, the resolution of the measured distance is $c/2 * BW$.

The motion amplitude of the micro-motion is small. For example, a thoracic cavity variation caused by respiration is within $\pm 5$ mm. In the case where the measurement method described above is used, a signal with a bandwidth of at least 30 GHz is required. In one aspect, the overhead of the sensing signal with such a large bandwidth is large. In another aspect, it is difficult to find a signal with such a large bandwidth, especially in a medium-to-low frequency band. A typical bandwidth is only 20 M, and the bandwidth of a millimeter wave frequency band is merely 100 M. In the method for feeding back sensing information according to the present disclosure, the sensitivity of the phase to the micro-motion is utilized, such that the accuracy of the sensing result is improved. As a result, the sensing of the micro-motion does not depend on a large bandwidth, the overhead of the sensing signal is reduced, and the sensing efficiency is improved.

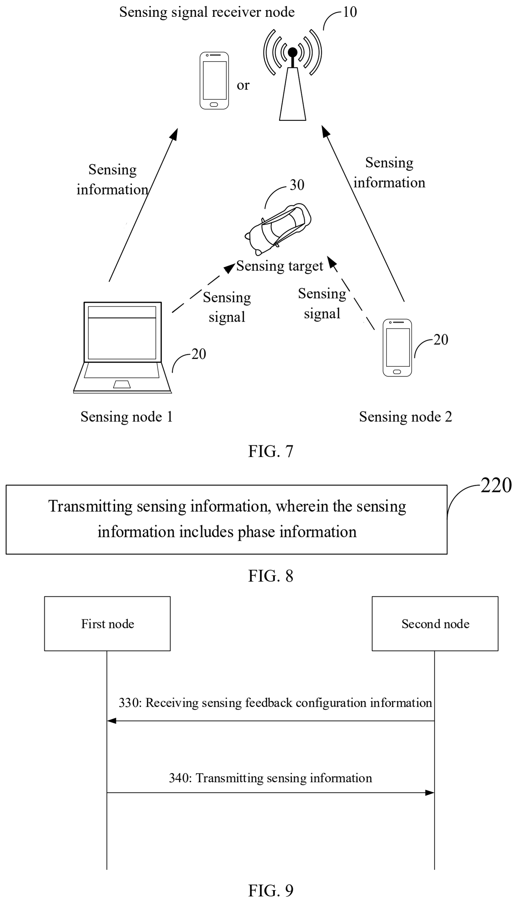

Referring to FIG. 7, FIG. 7 illustrates a block diagram of a sensing system according to some embodiments of the present disclosure. The sensing system may include: a sensing signal receiver node 10, a sensing node 20, and a sensing target 30.

The sensing signal receiver node 10 refers to a node that receives a sensing signal. The sensing signal receiver node may be a base station, a terminal, or a core network element. The sensing signal receiver node 10 may serve various roles in the sensing system. For example, the sensing signal receiver node 10 is a sensing trigger node, and the sensing trigger node initiates sensing, sets configuration of a sensing scenario, parses sensing feedback (for example, sensing information) transmitted by the sensing node, and the like. Alternatively, the sensing signal receiver node 10 is a sensing manager node, and the sensing manager node manages a sensing task.

The sensing node 20 includes a sensing transmitter node and a sensing receiver node. The sensing node 20 may include a base station, a terminal, an IoT device, or various handheld devices, vehicle-mounted devices, wearable devices, and computing devices with wireless communication functions, or other processing devices connected to wireless modems, and various forms of user equipment, MS, and the like. Generally, there are a plurality of sensing nodes 20, and one or more sensing nodes 20 may be distributed in the region controlled by each sensing signal receiver node 10.

The sensing target 30 is a target object that needs to be sensed, including a person or object to be sensed. For example, in the case where the sensing is applied to monitor an indoor intrusion, the sensing target 30 is an indoor intruder; or in the case where the sensing is applied to measure a vehicle speed, the sensing target 30 is a target vehicle on the road.

The sensing node 20, upon receiving the sensing task allocated by the sensing manager node, senses the sensing target 30 by transmitting or receiving a sensing signal. The sensing node 20, upon completing the sensing, transmits the sensing information to the sensing signal receiver node 10. For example, in FIG. 2, the sensing node transmits the sensing information to the sensing manager node. In some embodiments, the sensing information includes phase information.

Referring to FIG. 8, FIG. 8 illustrates a flowchart of a method for feeding back sensing information according to some embodiments of the present disclosure. The method is performed by a first node, and the first node may be the sensing node 20 in the sensing system illustrated in FIG. 7. The method may include the following process.

**In S220, sensing information is transmitted, wherein the sensing information includes phase information.**

Sensing refers to acquiring environmental information or target information using the electromagnetic wave (including the light wave) and/or the acoustic wave. Sensing information refers to information from which environmental information or target information is extracted.

The first node is a sensing node. In some embodiments, the first node is a sensing receiver node; that is, the first node, upon receiving a sensing signal (or referred to as a received signal), transmits the sensing information acquired from the sensing signal to the second node. The first node is any one of a base station or a terminal.

The second node is a receiver node of the sensing information. In some embodiments, the second node is the sensing information receiver node 10 in the sensing system illustrated in FIG. 7. In some embodiments, the second node is the sensing manager node. The second node is any one of a base station, a terminal, a server, or a core network element.

It should be noted that the method is applicable to various sensing modes illustrated in FIG. 1. In some embodiments, the sensing transmitter node and the sensing receiver node are the same node. In some embodiments, the sensing transmitter node and the sensing receiver node are different nodes.

In some embodiments, the first node transmits the sensing information to the second node. The sensing information includes the phase information.

The phase information includes at least one of:

- a phase;
- spectral information of a phase;
- pattern information of a phase; or
- statistical information of a phase.

The spectral information of the phase includes all or part of frequency-domain information acquired by transforming the phase information in a time window, for example, a frequency component acquired via Fourier transform on the phase and a corresponding spectral coefficient. The pattern information of the phase includes at least one of a variation period of the phase, a variation frequency of the phase, or a variation amplitude of the phase. The statistical information of the phase includes at least one of a statistical distribution of the phase or a proportion of phases reaching a threshold. The threshold is a predetermined phase threshold.

The phase includes at least one of:

- a phase of a received signal;
- a phase of a channel, wherein the channel is estimated from the received signal; or
- a phase of a processed received signal.

The channel is determined based on the received signal. In one method, the channel is determined by estimating the received signal. In some embodiments, the channel is determined by performing least square (LS) estimation on the received signal; that is, the received signal is divided by the transmitted signal. In some embodiments, the channel is determined by performing minimum mean square error (MMSE) estimation on the received signal; that is, the received signal is multiplied by MMSE filtering. It should be noted that the LS estimation and the MMSE estimation are two possible embodiments, the method for determining a channel by estimating a received signal is not limited thereto, and any estimation method in which a channel may be determined by estimating a received signal should fall within the scope of protection. In another method, an operation is performed between the received signal and the transmitted signal, and part of channel information may be extracted. For example, for a frequency-modulated continuous-wave signal, a frequency difference between the received signal and the transmitted signal is calculated, and the acquired frequency difference is positively correlated with a propagation time of the channel; that is, propagation time information of the channel may be acquired using such a method. The operation forms of multiplication or division in the estimation method are not limited in the present disclosure.

The processed received signal refers to information acquired by processing the received signal. In some embodiments, noise reduction processing is performed on the received signal; in some embodiments, received signals acquired from different carriers are divided; in some embodiments, received signals in different symbols/slots are divided, and the like. It should be noted that the embodiments are possible signal processing embodiments, but the method for processing the received signal is not limited thereto, and any method in which the received signal may be processed should fall within the scope of protection.

It should be noted that the phase of a received signal is in one-to-one correspondence to the received signal, and the phase of a channel is also in one-to-one correspondence to the channel (path). In this case, the channel generally refers to a component of a received signal in the time domain or a path of a time-domain channel. The phase of the received signal/channel may be a phase of the received signal/channel upon multi-path fusion. In this case, the channel generally refers to a frequency-domain signal or a frequency-domain channel.

The path for signal transmission is any one of a line-of-sight (LOS), a designated path, or N paths. That is, the channel is at least one of: an LOS path channel, a designated path channel, or an N-path channel. N represents a positive integer.

It should be noted that during the propagation process, a wireless signal directly reaches a receiver, or is reflected, refracted, or scattered by an object in the environment to the receiver. Therefore, the receiver may receive a superposition of signals from a plurality of paths. The plurality of paths are resolved using a technical mean, such as a delay difference between time-domain channels. However, the resolution is related to a structure of the transmitted signal (for example, a bandwidth) and a processing capability of the receiver. The LOS path, the designated path, or one of the N paths in the present disclosure refers to a path that can be resolvable under a structure of the signal and the processing capability of the receiver. Due to the limitations of the structure of the transmitted signal (for example, the bandwidth) and the processing capability of the receiver, the resolution is limited, and a resolved path may be a combination of a plurality of paths. Therefore, the concept of the path described above is relative, and refers to a path defined under conditions.

The LOS path is also referred to as line-of-sight propagation, and may refer to a propagation path along which a sensing signal is transmitted from a sensing transmitter node and directly reaches a sensing receiver node without any obstruction; or may refer to a propagation path along which a sensing signal is reflected by a target and directly reaches a sensing receiver node without any obstruction. The LOS path may be determined based on characteristics of a signal or a channel at a receiver, such as the shortest delay or strongest energy. The designated path refers to a path along which a sensing signal propagates or a path with a characteristic, such as a path with the second shortest delay. The N paths refer to a plurality of different paths that a wireless signal has experienced during propagation, and a plurality of signals in the N paths may have at least one of different delays, amplitudes, or phases when reaching a sensing receiver node. The phases of the N paths may be independent phase information of the N paths or combined phase information. That is, the phases of the N paths may be N phases corresponding to the N paths respectively, or a phase combined from a plurality of paths in the N paths.

The LOS path or the designated path is one of the N paths. The LOS path is the shortest path in the N paths; and the designated path may be an LOS path or a path other than the LOS path in the N paths.

The different types of phase information are described hereinafter.

(1) The phase information is a phase.

The phase is at least one of:

a phase of an LOS path channel;
a phase of a designated path channel; or
a phase of an N-path channel, wherein N represents a positive integer.

In some embodiments, in the case where the path refers to the LOS path or the designated path, that is, the phase is the phase of the LOS path channel or the phase of the designated path channel, the phase includes at least one of:

• a phase measured at a first moment, wherein the first moment is any moment during a sensing process; or

- M phases measured at M moments, wherein M represents a positive integer greater than 1.

In some embodiments, in the case where the path refers to the LOS path or the designated path, that is, the phase is the phase of the LOS path channel or the designated path channel, the sensing information further includes at least one of: a delay of the LOS path channel or the designated path channel; a distance of the LOS path channel or the designated path channel; an energy of the LOS path channel or the designated path channel; or an amplitude of the LOS path channel or the designated path channel.

For the phase measured at the first moment, a time-domain channel of a path may be represented as $h(t) = A \exp(-j\theta)$. h(t) represents a path of the time-domain channel, A represents the channel amplitude, $\theta$ represents the phase, j represents an imaginary number, and exp represents an exponential function. Generally, $\theta$ is strongly related to the propagation distance, that is, $\theta = \dfrac{2\pi d}{\lambda}$. d represents the signal propagation distance, and $\lambda$ represents the signal wavelength. For a higher frequency point, the wavelength is shorter. For example, in the case where the frequency point is 3 GHz, and the wavelength is 0.1 m, even a movement of 1 mm may cause a phase variation of 3.6 degrees. Thus, the phase is also sensitive to a minor motion. Therefore, the status of the micro-motion acquired based on the phase information is more accurate. Additionally, the information of the micro-motion may be sensitively captured based on a phase of a single carrier, without depending on a large bandwidth.

For the M phases measured at the M moments, the phase information at the plurality of moments may be fed back together. In one aspect, the motion pattern of the reflection point may be acquired by analyzing phases at the plurality of moments. For example, in the case where the sensing target is a person, the respiration frequency/heartbeat frequency of the person may be extracted through joint analysis on the phases at a plurality of moments of the person. In another aspect, the phase information at the plurality of moments is fed back together and is jointly encoded, such that the encoding efficiency, the spectral efficiency, and reliability of information transmission are improved.

In some embodiments, in the case where the path refers to N paths, that is, the phase is the phase of the N-path channel, the phase includes at least one of:

- N phases measured at a second moment, wherein the second moment is any moment during a sensing process; or
- M * N phases measured at M moments; that is, N phases measured at each of the M moments,

M represents a positive integer greater than 1, and N represents a positive integer.

In the case where the phase is the phase of the N-path channel, the sensing information further includes at least one of: a delay of at least one path in the N-path channel; a distance of at least one path in the N-path channel; an energy of at least one path in the N-path channel; or an amplitude of at least one path in the N-path channel.

In some embodiments, in the case where the number X of phases measured at the second moment is less than N, (N-X) phases in the N phases corresponding to the second moment are default values (populated with 0 in some embodiments). Alternatively, in the case where the number X of phases measured at the second moment is greater than N, the N phases corresponding to the second moment are N phases selected from the X phases.

In some embodiments, a third moment is any one of the M moments. In the case where the number X of phases measured at the third moment in the M moments is less than N, (N-X) phases in the N phases corresponding to the third moment are default values (populated with 0 in some embodiments). Alternatively, in the case where the number X of phases measured at the third moment in the M moments is greater than N, the N phases corresponding to the third moment are N phases selected from the X phases.

In some embodiments, in the case where the number X of phases is greater than N, the N phases are at least one type of:

- phases corresponding to N paths with the strongest energy in the X phases; or
- phases corresponding to N paths with the shortest delay in the X phases.

In some embodiments, in the case where all of the N paths are paths with the strongest energy and have the same energy, N phases are arbitrarily selected from the X phases; alternatively, the X phases are arranged in a descending order based on the energies of the paths, and the first N phases are selected, that is, the N phases are N phases arranged in a descending order based on the energies of the paths.

In some embodiments, in the case where all of the N paths are paths with the shortest delay and have the same delay, N phases are arbitrarily selected from the X phases; alternatively, the X phases are arranged in an ascending order based on the delays of the paths, and the first N phases are selected, that is, the N phases are N phases arranged in an ascending order based on the delays of the paths.

That is, in the case where the number X of phases measured at the second moment or the third moment is less than N, the N phases are populated with the default values , that is, the phases of (N-X) paths are default values (in some embodiments, 0); in the case where X is greater than N, the phase information of N paths with the strongest energy or the shortest delay is selected from the X paths.

For the N phases measured at the second moment, phase information of a plurality of reflection points may be acquired simultaneously at a moment. In one aspect, multi-target detection is achieved. In another aspect, target identification is facilitated. For example, for detection of a moving target, the phase varies with time, and thus the moving target may be identified while a stationary target is excluded.

For the M * N phases measured at M moments, phase information of a plurality of reflection points at a plurality of moments may be acquired simultaneously. In one aspect, multi-target detection is achieved. In another aspect, target identification is facilitated. For example, for detection of a moving target, the phase varies with time, and thus the moving target may be identified while a stationary target is excluded. Through joint analysis on the plurality of reflection points, a model of a complex motion may be restored using a method such as clustering or artificial intelligence (AI).

(2) The phase information is the spectral information of the phase.

The spectral information of the phase is a phase spectrum acquired by performing frequency analysis on a time-domain signal measured in a time window. That is, the spectral information of the phase may be acquired by transforming the phase measured in the time window. In some embodiments, the spectral information of the phase is acquired via fast Fourier transform (FFT); in some embodiments, the spectral information of the phase is acquired via the discrete Fourier transform (DFT); in some embodiments, the spectral information of the phase is acquired via the Hilbert transform. It should be noted that the method for acquiring the spectral information of the phase is not limited to the methods, and any method in which the spectral information of the phase may be acquired by transforming a time-domain signal into a frequency-domain signal falls within the scope of protection.

In some embodiments, the spectral information of the phase includes all or part of frequency-domain information acquired by transforming the phase information in a time window. In some embodiments, the spectral information of the phase includes all frequency components acquired by transforming the phase information in the time window. In some embodiments, the spectral information of the phase includes frequency components corresponding to P spectral coefficients with the strongest energy acquired by transforming the phase information in the time window. P represents a positive integer less than M.

In some embodiments, the spectral information of the phase further includes a spectral coefficient of a frequency component.

In some embodiments, the phase information in the time window is at least one of:

- phase information of an LOS path channel;
- phase information of a designated path channel; or
- phase information of an N-path channel, wherein N represents a positive integer.

In some embodiments, in the case where the path refers to the LOS path or the designated path, that is, the phase information in the time window is the phase information of the LOS path channel or the designated path channel, the spectral information of the phase is acquired by transforming M pieces of phase information measured at M moments. M represents a positive integer greater than 1.

In some embodiments, in the case where the phase information is the phase information of the LOS path channel or the designated path channel, the sensing information further includes at least one of:

- a delay of the LOS path channel or the designated path channel;
- a distance of the LOS path channel or the designated path channel;
- an energy of the LOS path channel or the designated path channel; or
- an amplitude of the LOS path channel or the designated path channel.

The spectral information acquired by transforming the M pieces of phase information measured at M moments directly reflects the frequency component of the phase information and the frequency of the motion. Compared with feedback of the phase information, this method features a small amount of feedback and directly corresponds to the requirement, such that the efficiency of information transmission is improved, and the operation at the sensing information receiver node (the second node) is avoided.

In some embodiments, the phase information in the time window is the phase information of the N-path channel, and the spectral information of the phase is acquired by transforming the M * N pieces of phase information measured at M moments. M represents a positive integer greater than 1, and N represents a positive integer.

In the case where the phase is the phase of the N-path channel, the sensing information further includes at least one of: a delay of at least one path in the N-path channel; a distance of at least one path in the N-path channel; an energy of at least one path in the N-path channel; or an amplitude of at least one path in the N-path channel.

In some embodiments, a fourth moment is any one of the M moments. In the case where the number X of phases measured at the fourth moment in the M moments is less than N, (N-X) phases in the N phases corresponding to the fourth moment are default values. Alternatively, in the case where the number X of phases measured at the fourth moment in the M moments is greater than N, the N phases corresponding to the fourth moment are N phases selected from the X phases.

In some embodiments, in the case where the number X of phases is greater than N, the N phases are at least one type of:

- phases corresponding to N paths with the strongest energy in the X phases; or
- phases corresponding to N paths with the shortest delay in the X phases.

That is, in the case where the number X of phases measured at the fourth moment is less than N, the N phases are populated with the default values, that is, the phase information of (N-X) paths are default values (in some embodiments, 0); in the case where X is greater than N, the phase information of N paths with the strongest energy or the shortest delay is selected from the X paths.

For the spectral information acquired by transforming the M * N pieces of phase information measured at M moments, spectral information of phases of a plurality of reflection points may be acquired simultaneously. In one aspect, multi-target detection is achieved. In another aspect, target identification is facilitated. For example, for detection of a moving target, the spectral information of the phase is greater than 0, and thus the moving target may be identified while a stationary target is excluded. Additionally, through joint spectral analysis on the plurality of reflection points, a model of a complex motion may be restored using a method such as clustering.

In some embodiments, the time window is at least one of:

- a first time window stipulated by a communication protocol;
- a second time window configured by a second node, wherein the second node is a receiver node of the sensing information; or
- a third time window configured by a sensing manager node.

The second node and the sensing manager node are the same node or different nodes.

In some embodiments, the protocol stipulates that the first time window is L. In some embodiments, the sensing manager node configures a length of the third time window to be L or 2L based on the length L of the service period range $(L_1, L_2)$.

(3) The phase information is the pattern information of the phase.

The pattern information of the phase includes at least one of:

- a variation period of the phase;
- a variation frequency of the phase; or
- a variation amplitude of the phase.

The amplitude of the phase may be a height of a peak, a difference between a peak and a trough, or the like.

In some embodiments, the phase is a phase that satisfies a predetermined condition. In some embodiments, the phase is a phase that reaches a predetermined threshold.

(4) The phase information is the statistical information of the phase.

The statistical information of the phase includes at least one of:

- a statistical distribution of the phase; or
- a proportion of phases reaching a threshold, wherein the threshold is a predetermined threshold for a phase value.

In some embodiments, in addition to the above information related to the phase, the information in the sensing information further includes information related to a target (for example, a sensing target). That is, the sensing information further includes at least one of:

- a distance to a target;
- a position of a target;
- an echo energy of a target; or
- a quality of a received signal.

The target refers to a broad concept, and may be a specific object, such as a person or a vehicle, or a region, such as a sensing grid (bin), a geographic location grid, or sensing a coordinate position.

The quality of the received signal includes at least one of: an energy of the received signal; a signal to interference plus noise ratio (SINR); or an LOS path probability.

In some embodiments, prior to transmitting the sensing information, the first node first receives sensing feedback configuration information (sensing feedback configuration information illustrated in FIG. 2 or 3) from the second node. The sensing feedback configuration information is used to indicate what information the first node needs to carry in transmitting the sensing information. That is, the first node receives the sensing feedback configuration information, and the sensing feedback configuration information is used to indicate the phase information carried by the first node in transmitting the sensing information.

In some embodiments, the sensing feedback configuration information is used to indicate which type of information related to the phase needs to be carried in the case where the first node transmits the sensing information; that is, the sensing feedback configuration information includes the type of phase information carried by the first node in transmitting the sensing information.

In some embodiments, the sensing feedback configuration information further includes at least one of:

- time window information; that is, in the case where the phase information is the spectral information of the phase, the sensing feedback configuration information further indicates the length of the time window;
- a number of paths; or
- information indicating whether a spectral coefficient is included; that is, in the case where the phase information is the spectral information of the phase, the sensing feedback configuration information further indicates whether a spectral coefficient corresponding to a frequency component needs to be carried in the sensing information.

There may be one or more paths.

In some embodiments, the term "sensing" in the embodiments of the present disclosure may also be replaced with "monitoring", "positioning", "distance measurement", "speed measurement", "angle measurement", "target imaging", "target detection", "target tracking", "target identification", and the like.

In summary, in the method according to the embodiments of the present disclosure, by transmitting the sensing information including the phase information, the sensitivity of the phase to the micro-motion is utilized, such that the problem that it is difficult to sense the energy and amplitude of the micro-motion is resolved, and the accuracy of the sensing result is improved. Thus, the sensing of the micro-motion does not depend on a large bandwidth, the overhead of the sensing signal is reduced, and the sensing efficiency is improved.

In addition, by feeding back the phase information at the plurality of moments together, the motion pattern of the reflection point is acquired based on the phases at the plurality of moments, and the phase information at the plurality of moments is jointly encoded, such that the encoding efficiency, the spectral efficiency, and reliability of information transmission are improved.

Moreover, by simultaneously acquiring the phase information of the plurality of reflection points at one moment, multi-target detection is achieved, and a moving target is identifiable while a stationary target is excluded.

Furthermore, through the joint analysis on the plurality of reflection points, the model of the complex motion is restored using a method such as clustering or AI.

Referring to FIG. 9, FIG. 9 illustrates a flowchart of a method for feeding back sensing information according to some embodiments of the present disclosure. The method is performed by a first node and a second node. The first node may be the sensing node 20 in the sensing system illustrated in FIG. 7, and the second node may be the sensing manager node 10 in the sensing system illustrated in FIG. 7. The method may include the following processes.

**In S330, sensing feedback configuration information is received.**

Sensing refers to acquiring target or environmental information using the electromagnetic wave (including the light wave) and/or the acoustic wave. Sensing information refers to information from which environmental information or target information is extracted.

The first node is a sensing node. In some embodiments, the first node is a sensing receiver node; that is, the first node, upon receiving a sensing signal, transmits the sensing information acquired from the sensing signal to the second node. The first node is any one of a base station or a terminal.

The second node is a receiver node of the sensing information. The second node may be a sensing manager node in a sensing scenario. The second node is any one of a base station, a terminal, a server, or a core network element.

In some embodiments, prior to transmitting the sensing information, the first node first receives sensing feedback configuration information from the second node. The sensing feedback configuration information is used to indicate what information the first node needs to carry in transmitting the sensing information. That is, the first node receives the sensing feedback configuration information, and the sensing feedback configuration information is used to indicate the phase information carried by the first node in transmitting the sensing information.

In some embodiments, the sensing feedback configuration information is used to indicate which type of information related to the phase needs to be carried in the case where the first node transmits the sensing information;

that is, the sensing feedback configuration information includes the type of phase information carried by the first node in transmitting the sensing information.

In some embodiments, the sensing feedback configuration information further includes at least one of:

- time window information;
- a number of paths; or
- information indicating whether a spectral coefficient is included.

There may be one or more paths.

**In S340, sensing information is transmitted.**

Sensing information refers to information from which environmental information or target information may be extracted.

In some embodiments, the first node transmits the sensing information to the second node. The sensing information includes phase information.

The phase information includes at least one of: a phase; spectral information of a phase; pattern information of a phase; or statistical information of a phase.

The phase includes at least one of: a phase of a received signal; a phase of a channel; or a phase of a processed received signal. The channel is estimated from the received signal.

The path for signal transmission is any one of: an LOS path, a designated path, or a path in N paths. That is, the phase information of the channel is at least one of: phase information of an LOS path channel; phase information of a designated path channel; or phase information of an N-path channel. N represents a positive integer.

In some embodiments, the path at a moment is selected for measurement; alternatively, the paths at M moments are selected for measurement. M represents a positive integer greater than 1.

The following description describe different embodiments of phase information in the sensing information using an example of the detection of human respiration.

(1) Phase information of a path is fed back.

The first node receives an echo signal of a path (for example, an echo signal of an LOS path) reflected by the human thoracic cavity at the t-th moment, and extracts the frequency-domain channel $\hat{H}[k]$ thereof. X[k] represents the transmitted sensing signal, and Y[k] represents the received sensing signal:

$$\widehat{H}[k] = \frac{Y[k]}{X[k]}, k = 0,1,2, \dots, N - 1$$

k represents an index of the frequency domain, and N represents a number of frequency-domain variables on which an inverse fast Fourier transform (IFFT) is performed.

The IFFT is performed on the frequency-domain channel $\hat{H}[k]$ to acquire the time-domain channel $\hat{h}(n)$:

$$\hat{h}(n) = \frac{1}{N} \sum_{k=0}^{N-1} \widehat{H}(k) \, e^{j2\pi\frac{kn}{N}}, k \in 0,1,2, \dots, N - 1$$

For the LOS path, in which no obstruction is present between the first node and the second node, the phase $\theta$ of the LOS path is acquired by determining the peak index in the time-domain channel and then extracting the phase:

$$\theta = Angle(\max\{\hat{h}(n)\})$$

n represents the index of the time domain, with a value range of {0, 1..., N - 1}; Angle() represents the function for extracting the phase; max() represents the function for extracting the maximum value.

The first node feeds back the phase information $\theta$ to the second node.

In some embodiments, the first node provides feedback upon each measurement; alternatively, the first node combines the $\theta$ measured at a plurality of moments for feedback.

In some embodiments, the plurality of moments correspond to a measurement time window, and the time window is configured by the second node.

(2) Phase information of a plurality of paths is fed back.

The first node receives echo signals of a plurality of paths (for example, echo signals of N-path signals) reflected by the human thoracic cavity at the t-th moment, and extracts the frequency-domain channel $\hat{H}[k]$ thereof. X[k] represents the transmitted sensing signal, and Y[k] represents the received sensing signal:

$$\hat{H}[k] = \frac{Y[k]}{X[k]}, k = 0,1,2,\dots,N-1$$

The IFFT is performed on the frequency-domain channel to acquire the time-domain channel:

$$\hat{h}(n) = \frac{1}{N} \sum_{k=0}^{N-1} \hat{H}(k)\, e^{j2\pi\frac{kn}{N}}, k \in 0,1,2,\dots,N-1$$

Phase extraction is performed on a plurality of peak points in the time-domain channel:

$$\theta_i = Angle\left(\max\{\hat{h}(i)\}\right)$$

i represents a positive integer less than or equal to N.

The first node feeds back the plurality of pieces of phase information $\theta_i$ to the second node.

In some embodiments, the first node provides feedback upon each measurement; alternatively, the first node combines the $\theta_i$ measured at a plurality of moments for feedback.

In some embodiments, the plurality of moments correspond to a measurement time window, and the time window is configured by the second node.

(3) Spectral information of the phase of one path is fed back.

The first node receives an echo signal of a path (for example, an echo signal of an LOS path) reflected by the human thoracic cavity at the t-th moment in a fourth time window. The fourth time window may be a time window configured by the second node. The fourth time window may be directly configured by the second node or configured by the second node based on actual conditions (for example, the time window is equal to an update period).

The frequency-domain channel $\hat{H}[k]$ of the echo signal is extracted. X[k] represents the transmitted sensing signal, and Y[k] represents the received sensing signal:

$$\hat{H}[k] = \frac{Y[k]}{X[k]}, k = 0,1,2,\dots,N-1$$

The IFFT is performed on the frequency-domain channel to acquire the time-domain channel:

$$\hat{h}(n) = \frac{1}{N} \sum_{k=0}^{N-1} \hat{H}(k)\, e^{j2\pi\frac{kn}{N}}, k \in 0,1,2,\dots,N-1$$

For the LOS path, the phase thereof is acquired by determining the peak index in the time-domain channel and then extracting the phase.

$$\theta(t) = Angle\left(\max\{\hat{h}(n)\}\right)$$

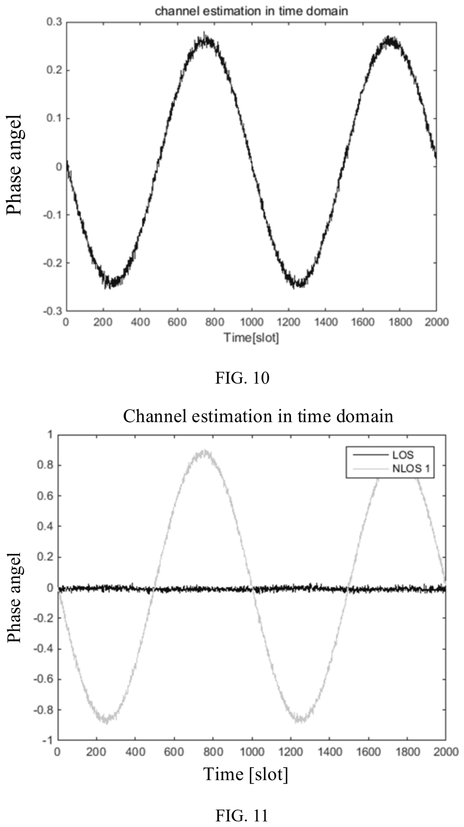

FIG. 10 illustrates a phase-time variation diagram measured in a fourth time window, which includes phase information $[\theta_0, \theta_1, \dots, \theta_{T-1}]$ corresponding to time. The horizontal axis represents the time, the vertical axis represents the phase angle, and T represents the length of the time window. FFT is performed on the phase information measured in the fourth time window:

$$f(n) = \sum_{k=0}^{T-1} \theta(k)\, e^{-j2\pi\frac{kn}{T}}, n \in 0,1,2,\dots,N-1$$

In some embodiments, the spectral information of the phase is all or part of the frequency components acquired upon FFT. For example, the frequency component $f_0 = 0.2$ Hz, which has the maximum spectral coefficient, is carried in the sensing information and transmitted to the second node.

In some embodiments, during the FFT, a normalization process is further added, for example, a normalization coefficient 1/T is added. However, the addition of the normalization process needs a consistent interpretation of the FFT between the first node and the second node.

(4) Spectral information of the phase of a plurality of paths is fed back.

The first node receives echo signals of a plurality of paths (for example, echo signals of an N-path channel) reflected by the human thoracic cavity at the t-th moment in a fifth time window. The fifth time window may be a time window configured by the second node. The fifth time window may be directly configured by the second node or configured by the second node based on actual conditions (for example, the time window is equal to an update period).

The frequency-domain channel $\hat{H}[k]$ of the echo signal is extracted. X[k] represents the transmitted sensing signal, and Y[k] represents the received sensing signal:

$$\hat{H}[k] = \frac{Y[k]}{X[k]}, k = 0,1,2,\dots,N-1$$

The IFFT is performed on the frequency-domain channel to acquire the time-domain channel:

$$\hat{h}(n) = \frac{1}{N}\sum_{k=0}^{N-1} \hat{H}(k)\, e^{j2\pi\frac{kn}{N}}, k \in 0,1,2,\dots,N-1$$

For the LOS path, the phase thereof is acquired by determining the peak index in the time-domain channel and then extracting the phase.

$$\theta(t) = Angle(\max\{\hat{h}(n)\})$$

FIG. 11 illustrates a phase-time variation diagram measured in a fifth time window. Using an example of an LOS path and a non-line-of-sight (NLOS) path, the diagram includes phase information $[\theta_0, \theta_1, \dots, \theta_{T-1}]$ of the two paths corresponding to time. The horizontal axis represents the time, the vertical axis represents the phase angle, and T represents the length of the time window. FFT is performed on the phase information measured in the fifth time window:

$$f(n) = \sum_{k=0}^{T-1} \theta(k)\, e^{-j2\pi\frac{kn}{T}}, n \in 0,1,2,\dots,N-1$$

In some embodiments, the spectral information of the phase is all or part of the frequency components acquired upon FFT. For example, the frequency components $f_0 = 0.2$ Hz and $f_0' = 0$ Hz, which have the maximum spectral coefficients for the respective two paths, are carried in the sensing information and transmitted to the second node.

In some embodiments, during the FFT, a normalization process is further added, for example, a normalization coefficient 1/T is added. However, the addition of the normalization process needs a consistent interpretation of the FFT between the first node and the second node.

It should be noted that S330 in the embodiments of the present disclosure is an optional process, and may be omitted or substituted in different embodiments. S330 may be implemented as an independent embodiment. For example, the process is independently implemented as a method for transmitting sensing feedback configuration information.

In summary, in the method according to the embodiments of the present disclosure, by transmitting the sensing information including the phase information, the sensitivity of the phase to the micro-motion is utilized, such that the problem that it is difficult to sense the energy and amplitude of the micro-motion is resolved, and the accuracy of the sensing result is improved. Thus, the sensing of the micro-motion does not depend on a large bandwidth, the overhead of the sensing signal is reduced, and the sensing efficiency is improved.

In addition, by feeding back the phase information at the plurality of moments together, the motion pattern of the reflection point is acquired through analysis on the phases at the plurality of moments. In addition, the phase information at the plurality of moments is jointly encoded, such that the encoding efficiency, the spectral efficiency, and reliability of information transmission are improved.

Moreover, by simultaneously acquiring the phase information of the plurality of reflection points at one moment, multi-target detection is achieved. In addition, target identification is facilitated, such that a moving target is identifiable while a stationary target is excluded.

Furthermore, through the joint analysis on the plurality of reflection points, the model of the complex motion is restored using a method such as clustering or AI.

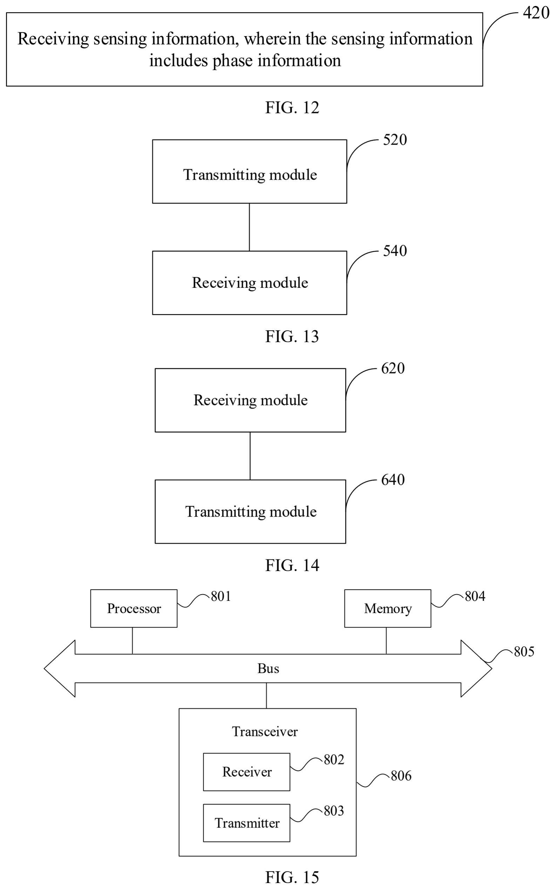

Referring to FIG. 12, FIG. 12 illustrates a flowchart of a method for feeding back sensing information according to some embodiments of the present disclosure. The method is performed by a second node. The second node is the sensing information receiver node 10 in the sensing system illustrated in FIG. 7, or the second node is a sensing manager node in a sensing scenario. The method may include the following process.

**In S420, sensing information is received, wherein the sensing information includes phase information.**

Sensing refers to acquiring target or environmental information using the electromagnetic wave (including the light wave) and/or the acoustic wave. Sensing information refers to information from which environmental information or target information is extracted.

The first node is a sensing node. In some embodiments, the first node is a sensing receiver node; that is, the first node, upon receiving a sensing signal (or referred to as a received signal), transmits the sensing information acquired from the sensing signal to the second node. The first node is any one of a base station or a terminal.

The second node is a receiver node of the sensing information. The second node is any one of a base station, a terminal, a server, or a core network element.

It should be noted that the method is applicable to various sensing modes illustrated in FIG. 1. In some embodiments, the sensing transmitter node and the sensing receiver node are the same node; in some embodiments, the sensing transmitter node and the sensing receiver node are different nodes.

In some embodiments, the second node receives the sensing information from the first node. The sensing information includes phase information.

The phase information includes at least one of:

- a phase;
- spectral information of a phase;
- pattern information of a phase; or
- statistical information of a phase.

The spectral information of the phase includes all or part of frequency-domain information acquired by transforming the phase information in a time window, for example, a frequency component acquired via Fourier transform on the phase and a corresponding spectral coefficient. The pattern information of the phase includes at least one of a variation period of the phase, a variation frequency of the phase, or a variation amplitude of the phase. The statistical information of the phase includes at least one of a statistical distribution of the phase or a proportion of phases reaching a threshold. The threshold is a predetermined phase threshold.

The phase includes at least one of:

- a phase of a received signal;
- a phase of a channel, wherein the channel is estimated from the received signal; or
- a phase of a processed received signal.

The channel is determined based on the received signal. In one method, the channel is determined by estimating the received signal. For example, the channel is determined by performing LS estimation on the received signal; that is, the received signal is divided by the transmitted signal. For example, the channel is determined by performing MMSE estimation on the received signal; that is, the received signal is multiplied by MMSE filtering. It should be noted that the LS estimation and the MMSE estimation are two possible embodiments, the method for determining a channel by estimating a received signal is not limited thereto, and any estimation method in which a channel may be determined by estimating a received signal should fall within the scope of protection. In another method, an operation is performed between the received signal and the transmitted signal, and part of channel information may be extracted. For example, for a frequency-modulated continuous-wave signal, a frequency difference between the received signal and the transmitted signal is calculated, and the acquired frequency difference is positively correlated with a propagation time of the channel; that is, propagation time information of the channel may be acquired using such a method. The operation forms of multiplication or division in the estimation method are not limited in the present disclosure.

The processed received signal refers to information acquired by processing the received signal. For example, noise reduction processing is performed on the received signal. For example, received signals acquired from different carriers are divided. For example, received signals from different symbols/slots are divided, and on the like. It should be noted that the examples are merely possible signal processing embodiments, but the method for processing the received signal is not limited thereto, and any method in which the received signal may be processed should fall within the scope of protection.

It should be noted that the phase of a received signal is in one-to-one correspondence to the received signal, and the phase of a channel is also in one-to-one correspondence to the channel (path). That is, a phase is specific to a received signal/channel (path). In this case, the channel generally refers to a component of a received signal in the time domain or a path of a time-domain channel. The phase of the received signal/channel may be a phase of the received signal/channel upon multi-path fusion. In this case, the channel generally refers to a frequency-domain signal or a frequency-domain channel.

The path for signal transmission may be any one of an LOS path, a designated path, or N paths. That is, the channel is at least one of: an LOS path channel, a designated path channel, or an N-path channel. N represents a positive integer.

It should be noted that during the propagation process, a wireless signal directly reaches a receiver, or is reflected, refracted, or scattered by an object in the environment to the receiver. Therefore, the receiver may receive a superposition of signals from a plurality of paths. The plurality of paths are resolved using a technical mean, such as a delay difference between time-domain channels. However, the resolution is related to a structure of the transmitted signal (for example, a bandwidth) and a processing capability of the receiver. The LOS path, the designated path, or one of the N paths in the present disclosure refers to a path that can be resolvable under a structure of the signal and the processing capability of the receiver. Due to the limitations of the structure of the transmitted signal (for example, the bandwidth) and the processing capability of the receiver, the resolution is limited, and a resolved path may be a combination of a plurality of physical paths. Therefore, the concept of the path described above is relative, and refers to a path defined under conditions.

The LOS path is also referred to as line-of-sight propagation, and may refer to a propagation path along which a sensing signal is transmitted from a sensing transmitter node and directly reaches a sensing receiver node without any obstruction, or may refer to a propagation path along which a sensing signal is reflected by a target and directly reaches a sensing receiver node without any obstruction. The LOS path may be determined based on characteristics of a signal or a channel at a receiver, such as the shortest delay or strongest energy. The designated path refers to a path along which a sensing signal propagates or a path with a characteristic, such as a path with the second shortest delay. The N paths refer to a plurality of different paths that a wireless signal has experienced during propagation, and a plurality of signals in the N paths may have at least one of different delays, amplitudes, or phases when reaching a sensing receiver node. The phases corresponding to the N paths may be independent phase information of the N paths or combined phase information. That is, the phase of the N paths may be N phases corresponding to the N paths, respectively, or a phase combined from a plurality of paths in the N paths.

The different types of phase information are described hereinafter.

(1) The phase information is a phase.

The phase is at least one of:

- a phase of an LOS path channel;
- a phase of a designated path channel; or
- a phase of an N-path channel, wherein N represents a positive integer.

In some embodiments, in the case where the path refers to the LOS path or the designated path, that is, the phase is the phase of the LOS path channel or the phase of the designated path channel, the phase includes at least one of:

- a phase measured at a first moment, wherein the first moment is any moment during a sensing process; or
- M phases measured at M moments, wherein M represents a positive integer greater than 1.

In some embodiments, in the case where the path refers to the LOS path or the designated path, that is, the phase is the phase of the LOS path channel or the designated path channel, the sensing information further includes at least one of: a delay of the LOS path channel or the designated path channel; a distance of the LOS path channel or the designated path channel; an energy of the LOS path channel or the designated path channel; or an amplitude of the LOS path channel or the designated path channel.

For the phase measured at the first moment, a time-domain channel of a path may be represented as $h(t) = A$ exp $(-j\theta)$. h(t) represents a path of the time-domain channel, A represents the channel amplitude, $\theta$ represents the phase, j represents an imaginary number, and exp represents an exponential function. Generally, $\theta$ is strongly related to the propagation distance, that is, $\theta = \dfrac{2\pi d}{\lambda}$ . d represents the signal propagation distance and $\lambda$ represents the signal wavelength. For a higher frequency point, the wavelength is shorter. For example, in the case where the frequency point is 3 GHz, and the wavelength is 0.1 m, even a movement of 1 mm may cause a phase variation of 3.6 degrees. Thus, the phase is also sensitive to a minor motion. Therefore, the status of the micro-motion acquired based on the phase information is more accurate. Additionally, the information of the micro-motion may be sensitively captured based on a phase of a single carrier, without depending on a large bandwidth.

For the M phases measured at the M moments, the phase information at the plurality of moments may be fed back together. In one aspect, the motion pattern of the reflection point may be acquired by analyzing phases at the plurality of moments. For example, in the case where the sensing target is a person, the respiration frequency/heartbeat frequency of the person may be extracted through joint analysis on the phases at a plurality of moments of the person. In another aspect, the phase information at the plurality of moments is fed back together and is jointly encoded, such that the encoding efficiency, the spectral efficiency, and reliability of information transmission are improved.

In some embodiments, in the case where the path refers to N paths, that is, the phase is the phase of the N-path channel, the phase includes at least one of:

- N phases measured at a second moment, wherein the second moment is any moment during a sensing process; or
- M * N phases measured at M moments; that is, N phases are measured at each of the M moments.

M represents a positive integer greater than 1, and N represents a positive integer.

In the case where the phase is the phase of the N-path channel, the sensing information further includes at least one of: a delay of at least one path in the N-path channel; a distance of at least one path in the N-path channel; an energy of at least one path in the N-path channel; or an amplitude of at least one path in the N-path channel.

In some embodiments, in the case where the number X of phases measured at the second moment is less than N, (N-X) phases in the N phases corresponding to the second moment are default values (populated with 0 in some embodiments). Alternatively, in the case where the number X of phases measured at the second moment is greater than N, the N phases corresponding to the second moment are N phases selected from the X phases.

In some embodiments, a third moment is any one of the M moments. In the case where the number X of phases measured at the third moment in the M moments is less than N, (N-X) phases in the N phases corresponding to the third moment are default values (for example, populated with 0). Alternatively, in the case where the number X of phases measured at the third moment in the M moments is greater than N, the N phases corresponding to the third moment are N phases selected from the X phases.

In some embodiments, in the case where the number X of phases is greater than N, the N phases are at least one type of:

- phases corresponding to N paths with the strongest energy in the X phases; or
- phases corresponding to N paths with the shortest delay in the X phases.

In some embodiments, in the case where all of the N paths are paths with the strongest energy and have the same energy, N phases are arbitrarily selected from the X phases; alternatively, the X phases are arranged in a descending order based on the energies of the paths, and the first N phases are selected, that is, the N phases are N phases arranged in a descending order based on the energies of the paths.

In some embodiments, in the case where all of the N paths are paths with the shortest delay and have the same delay, N phases are arbitrarily selected from the X phases; alternatively, the X phases are arranged in an ascending order based on the delays of the paths, and the first N phases are selected, that is, the N phases are N phases arranged in an ascending order based on the delays of the paths.

That is, in the case where the number X of phases measured at the second moment or the third moment is less than N, the N phases are populated with the default values, that is, the phases of (N-X) paths are default values (in some embodiments, 0); in the case where X is greater than N, the phase information of N paths with the strongest energy or the shortest delay is selected from the X paths.

For the N phases measured at the second moment, phase information of a plurality of reflection points may be acquired simultaneously at a moment. In one aspect, multi-target detection is achieved. In another aspect, target identification is facilitated. For example, for detection of a moving target, the phase varies with time, and thus the moving target may be identified while a stationary target is excluded.

For the M * N phases measured at M moments, phase information of a plurality of reflection points at a plurality of moments may be acquired simultaneously. In one aspect, multi-target detection is achieved. In another aspect, target identification is facilitated. For example, for detection of a moving target, the phase varies with time, and thus the moving target may be identified while a stationary target is excluded. Through joint analysis on the plurality of reflection points, a model of a complex motion may be restored using a method such as clustering or AI.

(2) The phase information is the spectral information of the phase.

The spectral information of the phase is a phase spectrum acquired by performing frequency analysis on a time-domain signal measured in a time window. That is, the spectral information of the phase is acquired by transformation of the phase measured in the time window. For example, the spectral information of the phase is acquired via FFT. For another example, the spectral information of the phase is acquired via DFT. For example, the spectral information of the phase is acquired via the Hilbert transform. It should be noted that the method for acquiring the spectral information of the phase is not limited to the methods, and any method in which the spectral information of the phase may be acquired by transforming a time-domain signal into a frequency-domain signal falls within the scope of protection.

In some embodiments, the spectral information of the phase includes all or part of frequency-domain information acquired by transforming the phase information in a time window. For example, the spectral information of the phase includes all frequency components acquired by transforming the phase information in the time window. For example, the spectral information of the phase includes frequency components corresponding to P spectral coefficients with the strongest energy acquired by transforming the phase information in the time window. P represents a positive integer less than M.

In some embodiments, the spectral information of the phase further includes a spectral coefficient of a frequency component.

In some embodiments, the phase information in the time window is at least one of:

- phase information of an LOS path channel;
- phase information of a designated path channel; or
- phase information of an N-path channel, wherein N represents a positive integer.

In some embodiments, in the case where the path refers to the LOS path or the designated path, that is, the phase information in the time window is the phase information of the LOS path channel or the designated path channel, the spectral information of the phase is acquired by transforming M pieces of phase information measured at M moments. M represents a positive integer greater than 1.

In some embodiments, in the case where the phase information is the phase information of the LOS path channel or the designated path channel, the sensing information further includes at least one of:

- a delay of the LOS path channel or the designated path channel;
- a distance of the LOS path channel or the designated path channel;
- an energy of the LOS path channel or the designated path channel; or
- an amplitude of the LOS path channel or the designated path channel.

The spectral information acquired by transforming the M pieces of phase information measured at M moments directly reflects the frequency component of the phase information and the frequency of the motion. Compared with feedback of the phase information, this method features a small amount of feedback and directly corresponds to the requirement, such that the efficiency of information transmission is improved and the operation at the sensing information receiver node (the second node) is avoided.

In some embodiments, the phase information in the time window is the phase information of the N-path channel, and the spectral information of the phase is acquired by transforming the M * N pieces of phase information measured at M moments. M·represents a positive integer greater than 1, and N represents a positive integer.

In the case where the phase is the phase of the N-path channel, the sensing information further includes at least one of: a delay of at least one path in the N-path channel; a distance of at least one path in the N-path channel; an energy of at least one path in the N-path channel; or an amplitude of at least one path in the N-path channel.

In some embodiments, a fourth moment is any one of the M moments. In the case where the number X of phases measured at the fourth moment in the M moments is less than N, (N-X) phases in the N phases corresponding to the fourth moment are default values. Alternatively, in the case where the number X of phases measured at the fourth moment in the M moments is greater than N, the N phases corresponding to the fourth moment are N phases selected from the X phases.

In some embodiments, in the case where the number X of phases is greater than N, the N phases are at least one type of:

- phases corresponding to N paths with the strongest energy in the X phases; or

- phases corresponding to N paths with the shortest delay in the X phases.

That is, in the case where the number X of phases measured at the fourth moment is less than N, the N phases are populated with the default values, that is, the phase information of (N-X) paths are default values (in some embodiments, 0); in the case where X is greater than N, the phase information of N paths with the strongest energy or the shortest delay is selected from the X paths.

For the spectral information acquired by transforming the M * N pieces of phase information measured at M moments, spectral information of phases of a plurality of reflection points may be acquired simultaneously. In one aspect, multi-target detection is achieved. In another aspect, target identification is facilitated. For example, for detection of a moving target, the spectral information of the phase is greater than 0, and thus the moving target may be identified while a stationary target is excluded. Additionally, through joint spectral analysis on the plurality of reflection points, a model of a complex motion may be restored using a method such as clustering.

In some embodiments, the time window is at least one of:

- a first time window stipulated by a communication protocol;
- a second time window configured by a second node, wherein the second node is a receiver node of the sensing information; or
- a third time window configured by a sensing manager node.

The second node and the sensing manager node are the same node or different nodes.

In some embodiments, the protocol stipulates that the first time window is L. In some embodiments, the sensing manager node configures a length of the third time window to be L or 2L based on the length L of the service period range $(L_1, L_2)$.

(3) The phase information is the pattern information of the phase.

The pattern information of the phase includes at least one of:

- a variation period of the phase;
- a variation frequency of the phase; or
- a variation amplitude of the phase.

The amplitude of the phase may be a height of a peak, a difference between a peak and a trough, or the like.

In some embodiments, the phase is a phase that satisfies a predetermined condition, for example, a phase reaching a predetermined threshold.

(4) The phase information is the statistical information of the phase.

The statistical information of the phase includes at least one of:

- a statistical distribution of the phase; or
- a proportion of phases reaching a threshold, where the threshold is a predetermined threshold for a phase value.

In some embodiments, in addition to the above information related to the phase, the information in the sensing information further includes information related to a target (for example, a sensing target). That is, the sensing information further includes at least one of:

- a distance to a target;
- a position of a target;
- an echo energy of a target; or
- a quality of a received signal.

The target refers to a broad concept, and may be a specific object, such as a person or a vehicle, or a region, such as a sensing grid (bin) or sensing a coordinate position.

The quality of the received signal includes at least one of: an energy of the received signal; an SINR; or an LOS path probability.

In some embodiments, prior to the first node transmits the sensing information, the second node first transmits the sensing feedback configuration information (for example, the sensing feedback configuration information illustrated in FIG. 2 or 3) to the first node. The sensing feedback configuration information is used to indicate what information the first node needs to carry in transmitting the sensing information. That is, the second node transmits the sensing feedback configuration information, and the sensing feedback configuration information is used to indicate the phase information carried by the first node in transmitting the sensing information.

In some embodiments, the sensing feedback configuration information is used to indicate which type of information related to the phase needs to be carried in the case where the first node transmits the sensing information; that is, the sensing feedback configuration information includes the type of phase information carried by the first node in transmitting the sensing information.

In some embodiments, the sensing feedback configuration information further includes at least one of:

- time window information; that is, in the case where the phase information is the spectral information of the phase, the sensing feedback configuration information further indicates the length of the time window;
- a number of paths; or
- information indicating whether a spectral coefficient is included. That is, in the case where the phase information is the spectral information of the phase, the sensing feedback configuration information further indicates whether a spectral coefficient corresponding to a frequency component needs to be carried in the sensing information.

There may be one or more paths.

In some embodiments, the term "sensing" in the embodiments of the present disclosure may also be replaced with "monitoring", "positioning", "distance measurement", "speed measurement", "angle measurement", "target imaging", "target detection", "target tracking", "target identification", and the like.

In summary, in the method according to the embodiments of the present disclosure, by transmitting the sensing information including the phase information, the sensitivity of the phase to the micro-motion is utilized, such that the problem that it is difficult to sense the energy and amplitude of the micro-motion is resolved, and the accuracy of the sensing result is improved. Thus, the sensing of the micro-motion does not depend on a large bandwidth, the overhead of the sensing signal is reduced, and the sensing efficiency is improved.

In addition, by feeding back the phase information at the plurality of moments together, the motion pattern of the reflection point is acquired based on the phases at the plurality of moments, and the phase information at the plurality of moments is jointly encoded, such that the encoding efficiency, the spectral efficiency, and reliability of information transmission are improved.

Moreover, by simultaneously acquiring the phase information of the plurality of reflection points at one moment, multi-target detection is achieved, and a moving target is identifiable while a stationary target is excluded.

Furthermore, through the joint analysis on the plurality of reflection points, the model of the complex motion is restored using a method such as clustering or AI.

FIG. 13 illustrates a block diagram of the structure of an apparatus for feeding back sensing information according to some embodiments of the present disclosure. The apparatus has the function of implementing the method embodiments for the first node described above. The function may be implemented through hardware or through software executed by hardware. The apparatus may be the first node described above or may be configured in the first node. As illustrated in FIG. 13, the device may include a transmitting module 520 and a receiving module 540. The transmitting module 520 may be practiced as the transmitter in the sensing device illustrated in FIG. 15, and the receiving module 540 may be practiced as the receiver in the sensing device illustrated in FIG. 15.

The transmitting module 520 is configured to transmit sensing information, wherein the sensing information includes phase information.

In some embodiments, phase information includes at least one of: a phase; spectral information of a phase; pattern information of a phase; or statistical information of a phase.

In some embodiments, the phase includes at least one of: a phase of a received signal; a phase of a channel, wherein the channel is estimated from the received signal; or a phase of a processed received signal.

In some embodiments, the channel is at least one of: an LOS channel; a designated path channel; or an N-path channel; wherein N represents a positive integer.

In some embodiments, the channel is the LOS path channel or the designated path channel, and the phase includes at least one of: a phase measured at a first moment; or M phases measured at M moments; wherein M represents a positive integer greater than 1.

In some embodiments, the sensing information further includes at least one of: a delay of the LOS path channel or the designated path channel; a distance of the LOS path channel or the designated path channel; an energy of the LOS path channel or the designated path channel; or an amplitude of the LOS path channel or the designated path channel.

In some embodiments, the channel is the N-path channel, and the phase includes at least one of: N phases measured at a second moment; or M * N phases measured at M moments; wherein M represents a positive integer greater than 1, and N represents a positive integer.

In some embodiments, the sensing information further includes at least one of: a delay of at least one path in the N-path channel; a distance of at least one path in the N-path channel; an energy of at least one path in the N-path channel; or an amplitude of at least one path in the N-path channel.

In some embodiments, in a case where a number X of phases measured at the second moment is less than N, (N-X) phases in the N phases corresponding to the second moment are default values; or in a case where a number X of phases measured at the second moment is greater than N, the N phases corresponding to the second moment are N phases selected from the X phases.

In some embodiments, in a case where a number X of phases measured at a third moment in the M moments is less than N, (N-X) phases in N phases corresponding to the third moment are default values; or in a case where a number X of phases measured at a third moment in the M moments is greater than N, N phases corresponding to the third moment are N phases selected from the X phases.

In some embodiments, in the case where the number X of phases is greater than N, the N phases are at least one type of: phases corresponding to N paths with the strongest energy in the X phases; or phases corresponding to N paths with the shortest delay in the X phases.

In some embodiments, the spectral information of the phase includes all or part of frequency-domain information acquired by transforming phase information in a time window.

In some embodiments, the time window is at least one of: a first time window stipulated by a communication protocol; a second time window configured by a second node, wherein the second node is a receiver node of the sensing information; or a third time window configured by a sensing manager node.

In some embodiments, the pattern information of the phase includes at least one of: a variation period of the phase; a variation frequency of the phase; or a variation amplitude of the phase.

In some embodiments, the statistical information of the phase includes at least one of: a statistical distribution of the phase; or a proportion of phases reaching a threshold.

In some embodiments, the sensing information further includes at least one of: a distance to a target; a position of a target; an echo energy of a target; or a quality of a received signal.

In some embodiments, the receiving module 540 is configured to receive sensing feedback configuration information, wherein the sensing feedback configuration information is used to indicate phase information carried by the first node in transmitting the sensing information.

In some embodiments, the sensing feedback configuration information further includes at least one of: time window information; a number of paths; or information indicating whether a spectral coefficient is included.

It should be noted that the transmitting module 520 independently implements embodiments of the method for feeding back sensing information or the method for transmitting sensing information, the transmitting module 520 and the receiving module 540 jointly implement embodiments of the method for feeding back sensing information, or the receiving module 540 independently implements embodiments of the method for receiving sensing information, and the like, which is not limited in the present disclosure.

FIG. 14 illustrates a block diagram of the structure of an apparatus for feeding back sensing information according to some embodiments of the present disclosure. The apparatus has the function of implementing the method embodiments for the second node described above. The function may be implemented through hardware or through software executed by hardware. The apparatus may be the second node described above or may be configured in the second node. As illustrated in FIG. 14, the device may include a receiving module 620 and a transmitting module 640. The receiving module 620 may be practiced as the receiver in the sensing device illustrated in FIG. 15, and the transmitting module 640 may be practiced as the transmitter in the sensing device illustrated in FIG. 15.

In some embodiments, the receiving module 620 is configured to receive sensing information, wherein the sensing information includes phase information.

In some embodiments, the phase information includes at least one of: a phase; spectral information of a phase; pattern information of a phase; or statistical information of a phase.

In some embodiments, the phase includes at least one of: a phase of a received signal; a phase of a channel, wherein the channel is estimated from the received signal; or a phase of a processed received signal.

In some embodiments, the channel is at least one of: an LOS channel; a designated path channel; or an N-path channel; wherein N represents a positive integer.

In some embodiments, the channel is the LOS path channel or the designated path channel, and the phase includes at least one of: a phase measured at a first moment; or M phases measured at M moments; wherein M represents a positive integer greater than 1.

In some embodiments, the sensing information further includes at least one of: a delay of the LOS path channel or the designated path channel; a distance of the LOS path channel or the designated path channel; an energy of the LOS path channel or the designated path channel; or an amplitude of the LOS path channel or the designated path channel.

In some embodiments, the channel is the N-path channel, and the phase includes at least one of: N phases measured at a second moment; or M * N phases measured at M moments; wherein M represents a positive integer greater than 1, and N represents a positive integer.

In some embodiments, the sensing information further includes at least one of: a delay of at least one path in the N-path channel; a distance of at least one path in the N-path channel; an energy of at least one path in the N-path channel; or an amplitude of at least one path in the N-path channel.

In some embodiments, in a case where a number X of phases measured at the second moment is less than N, (N-X) phases in the N phases corresponding to the second moment are default values; or, in a case where a number X of phases measured at the second moment is greater than N, the N phases corresponding to the second moment are N phases selected from the X phases.

In some embodiments, in a case where a number X of phases measured at a third moment in the M moments is less than N, (N-X) phases in N phases corresponding to the third moment are default values; or, in a case where a number X of phases measured at a third moment in the M moments is greater than N, N phases corresponding to the third moment are N phases selected from the X phases.

In some embodiments, in the case where the number X of phases is greater than N, the N phases are at least type one of: phases corresponding to N paths with the strongest energy in the X phases; or phases corresponding to N paths with the shortest delay in the X phases.

In some embodiments, the spectral information of the phase includes all or part of frequency-domain information acquired by transforming phase information in a time window.

In some embodiments, the time window is at least one of: a first time window stipulated by a communication protocol; a second time window configured by a second node, wherein the second node is a receiver node of the sensing information; or a third time window configured by a sensing manager node.

In some embodiments, the pattern information of the phase includes at least one of: a variation period of the phase; a variation frequency of the phase; or a variation amplitude of the phase.

In some embodiments, the statistical information of the phase includes at least one of: a statistical distribution of the phase; or a proportion of phases reaching a threshold.

In some embodiments, the sensing information further includes at least one of: a distance to a target; a position of a target; an echo energy of a target; or a quality of a received signal.

In some embodiments, the transmitting module 640 is configured to receive sensing feedback configuration information, wherein the sensing feedback configuration information is used to indicate phase information carried by the first node in transmitting the sensing information.

In some embodiments, the sensing feedback configuration information further includes at least one of: time window information; number of paths; or information indicating whether a spectral coefficient is included.

It should be noted that the receiving module 620 independently implements embodiments of the method for feeding back sensing information or the method for receiving sensing information, the receiving module 620 and the transmitting module 640 jointly implement embodiments of the method for feeding back sensing information, or the transmitting module 640 independently implements embodiments of the method for transmitting sensing information, and the like, which is not limited in the present disclosure.

It should be noted that in the case where the apparatus according to the above embodiments implements its functions, the division of the functional modules is only for illustrative purposes. In practice, the functions may be distributed to different functional modules based on actual needs, that is, the internal structure of the apparatus may be divided into different functional modules to complete all or part of the functions described above.

Regarding the apparatus in the above embodiments, the specific way in which each module performs operations has been described in detail in the relevant method embodiments, and is not described any further.

Referring to FIG. 15, FIG. 15 illustrates a schematic structural diagram of a sensing device according to some embodiments of the present disclosure. The sensing device includes: a processor 801, a receiver 802, a transmitter 803, a memory 804, and a bus 805.

The processor 801 includes one or more processing cores, and the processor 801 executes various functional applications and performs information processing by running software programs and modules. In some embodiments, the processor 801 is configured to determine the content of the phase information carried in the sensing information transmitted to the second node after the receiving module 540 receives the sensing feedback configuration information.

The receiver 802 and the transmitter 803 may be practiced as a transceiver 806, and the transceiver 806 may be a communication chip. The receiver 802 is configured to implement the functions and processes of the receiving module 540 and the receiving module 620 described above, and the transmitter 803 is configured to implement the functions and processes of the transmitting module 520 and the transmitting module 640 described above.

The memory 804 is connected to the processor 801 via the bus 805. The memory 804 is configured to store one or more computer programs, and the processor 801 is configured to run the one or more computer programs to perform the processes performed by the nodes in the method embodiments described above.

Furthermore, the memory 804 is implemented by any type or a combination of volatile or non-volatile storage devices, including, but not limited to: a random-access memory (RAM), a read-only memory (ROM), an erasable programmable read-only memory (EPROM), an electrically erasable programmable read-only memory (EEPROM), a flash memory or other solid-state memory technologies, a compact disc read-only memory (CD-ROM), a digital video disc (DVD) or other optical storage, a magnetic cassette, a magnetic tape, magnetic disk storage, or other magnetic storage devices.

In the case where the sensing device is practiced as a first node, the processor and the transceiver in the embodiments of the present disclosure perform the processes performed by the first node in the method as illustrated in any one of FIG. 8 or 9, which are not repeated herein.

In some embodiments, in the case where the sensing device is practiced as a first node, the transmitter 803 is configured to transmit sensing information, and the sensing information includes phase information.

In the case where the sensing device is practiced as a second node, the processor and the transceiver in the embodiments of the present disclosure perform the processes performed by the second node in the method as illustrated in any one of FIG. 9 or 12, which are not repeated herein.

In some embodiments, in the case where the sensing device is practiced as a second node, the receiver 802 is configured to receive sensing information, and the sensing information includes phase information.

According to the embodiments of the present disclosure, a computer-readable storage medium is further provided. The storage medium stores one or more computer programs. The one or more computer programs, when run by a processor of a first node or a second node, cause the processor to perform the method for feeding back sensing information described above.

In some embodiments, the computer-readable storage medium includes: a ROM, a RAM, a solid state drive (SSD), an optical disk, or the like. The RAM includes a resistance random-access memory (ReRAM) and a dynamic random-access memory (DRAM).

According to the embodiments of the present disclosure, a chip is further provided. The chip includes programmable logic circuitry and/or one or more program instructions. The chip, when running, is caused to perform the method for feeding back sensing information described above.

According to the embodiments of the present disclosure, a computer program product or a computer program is further provided. The computer program product or the computer program includes one or more computer instructions stored in a computer-readable storage medium. The one or more computer instructions, when read from the computer-readable storage medium and executed by processors of a first node and a second node, cause the processors to perform the method for feeding back sensing information described above.

It should be understood that the "indication" mentioned in the embodiments of the present disclosure may be a direct indication, an indirect indication, or an indication that there is an association relationship. For example, "A indicates B" may mean that A indicates B directly, e.g., B may be acquired through A; or that A indicates B indirectly, e.g., A indicates C through which B may be acquired; or that an association relationship is present between A and B. In the description of the embodiments of the present disclosure, the term "correspond" indicates a direct or indirect corresponding relationship between two items, or indicates an association relationship between the two. It may also indicate relationships such as indicating and being indicated, and configuring and being configured. The term "a plurality of" mentioned herein means two or more. The term "and/or" describes the association relationship between the associated objects and indicates that three relationships may be present. For example, A and/or B may indicate (A), (A and B), or (B). The symbol "/" generally indicates an "or" relationship between the associated objects. In addition, serial numbers of the processes described herein only show an exemplary possible execution sequence among the steps, and in some embodiments, the processes may also be executed out of the numbering sequence, for example, two processes with different serial numbers are executed simultaneously, or two processes with different serial numbers are executed in a reverse order to the illustrated sequence, which is not limited in the present disclosure.

Those skilled in the art should recognize that in the one or more examples described above, the functions described in the embodiments of the present disclosure may be implemented using hardware, software, firmware, or any combination thereof. The functions, when implemented using software, are stored in a computer-readable medium or transmitted as one or more instructions or codes on the computer-readable medium. The computer-readable medium includes a computer storage medium and a communication medium, where the communication medium includes any medium that facilitates the transfer of a computer program from one place to another. The storage medium is any available medium that is accessible by a general-purpose or special-purpose computer.

Described above are merely exemplary embodiments of the present disclosure and are not intended to limit the present disclosure. Any modifications, equivalent substitutions, improvements, and the like, made within the spirit and principle of the present disclosure should fall within the scope of protection of the present disclosure.

**Claims**

**1.** A method for feeding back sensing information, performed by a first node, the method comprising:
   transmitting sensing information, wherein the sensing information comprises phase information.

**2.** The method according to claim 1, wherein the phase information comprises at least one of:

a phase;
spectral information of a phase;
pattern information of a phase; or
statistical information of a phase.

3. The method according to claim 2, wherein the phase comprises at least one of:

a phase of a received signal;
a phase of a channel, wherein the channel is estimated from the received signal; or
a phase of a processed received signal.

4. The method according to claim 3, wherein the channel is at least one of:

a line-of-sight (LOS) channel;
a designated path channel; or
an N-path channel;
wherein N represents a positive integer.

5. The method according to claim 4, wherein the channel is the LOS path channel or the designated path channel, and the phase comprises at least one of:

a phase measured at a first moment; or
M phases measured at M moments;
wherein M represents a positive integer greater than 1.

6. The method according to claim 5, wherein the sensing information further comprises at least one of:

a delay of the LOS path channel or the designated path channel;
a distance of the LOS path channel or the designated path channel;
an energy of the LOS path channel or the designated path channel; or
an amplitude of the LOS path channel or the designated path channel.

7. The method according to claim 4, wherein the channel is the N-path channel, and the phase comprises at least one of:

N phases measured at a second moment; or
M * N phases measured at M moments;
wherein M represents a positive integer greater than 1, and N represents a positive integer.

8. The method according to claim 7, wherein the sensing information further comprises at least one of:

a delay of at least one path in the N-path channel;
a distance of at least one path in the N-path channel;
an energy of at least one path in the N-path channel; or
an amplitude of at least one path in the N-path channel.

9. The method according to claim 7, wherein

in a case where a number X of phases measured at the second moment is less than N, (N-X) phases in the N phases corresponding to the second moment are default values; or
in a case where a number X of phases measured at the second moment is greater than N, the N phases corresponding to the second moment are N phases selected from the X phases.

10. The method according to claim 7, wherein

in a case where a number X of phases measured at a third moment in the M moments is less than N, (N-X) phases in N phases corresponding to the third moment are default values; or
in a case where a number X of phases measured at a third moment in the M moments is greater than N, N phases corresponding to the third moment are N phases selected from the X phases.

11. The method according to claim 9 or 10, wherein in the case where the number X of phases is greater than N, the N phases are at least one type of:

> phases corresponding to N paths with the strongest energy in the X phases; or
> phases corresponding to N paths with the shortest delay in the X phases.

12. The method according to claim 2, wherein
the spectral information of the phase comprises all or part of frequency-domain information acquired by transforming phase information in a time window.

13. The method according to claim 12, wherein the time window is at least one of:

> a first time window stipulated by a communication protocol;
> a second time window configured by a second node, wherein the second node is a receiver node of the sensing information; or
> a third time window configured by a sensing manager node.

14. The method according to claim 2, wherein the pattern information of the phase comprises at least one of:

> a variation period of the phase;
> a variation frequency of the phase; or
> a variation amplitude of the phase.

15. The method according to claim 2, wherein the statistical information of the phase comprises at least one of:

> a statistical distribution of the phase; or
> a proportion of phases reaching a threshold.

16. The method according to any one of claims 1 to 15, wherein the sensing information further comprises at least one of:

> a distance to a target;
> a position of a target;
> an echo energy of a target; or
> a quality of a received signal.

17. The method according to any one of claims 1 to 15, further comprising:
receiving sensing feedback configuration information, wherein the sensing feedback configuration information is used to indicate phase information carried by the first node in transmitting the sensing information.

18. The method according to claim 17, wherein the sensing feedback configuration information further comprises at least one of:

> time window information;
> a number of paths; or
> information indicating whether a spectral coefficient is included.

19. A method for feeding back sensing information, performed by a second node, the method comprising:
receiving sensing information, wherein the sensing information comprises phase information.

20. The method according to claim 19, wherein the phase information comprises at least one of:

> a phase;
> spectral information of a phase;
> pattern information of a phase; or
> statistical information of a phase.

21. The method according to claim 20, wherein the phase comprises at least one of:

a phase of a received signal;
a phase of a channel, wherein the channel is estimated from the received signal; or
a phase of a processed received signal.

22. The method according to claim 21, wherein the channel is at least one of:

a line-of-sight (LOS) channel;
a designated path channel; or
an N-path channel;
wherein N represents a positive integer.

23. The method according to claim 22, wherein the channel is the LOS path channel or the designated path channel, and the phase comprises at least one of:

a phase measured at a first moment; or
M phases measured at M moments;
wherein M represents a positive integer greater than 1.

24. The method according to claim 23, wherein the sensing information further comprises at least one of:

a delay of the LOS path channel or the designated path channel;
a distance of the LOS path channel or the designated path channel;
an energy of the LOS path channel or the designated path channel; or
an amplitude of the LOS path channel or the designated path channel.

25. The method according to claim 22, wherein the channel is the N-path channel, and the phase comprises at least one of:

N phases measured at a second moment; or
M * N phases measured at M moments;
wherein M represents a positive integer greater than 1, and N represents a positive integer.

26. The method according to claim 25, wherein the sensing information further comprises at least one of:

a delay of at least one path in the N-path channel;
a distance of at least one path in the N-path channel;
an energy of at least one path in the N-path channel; or
an amplitude of at least one path in the N-path channel.

27. The method according to claim 25, wherein

in a case where a number X of phases measured at the second moment is less than N, (N-X) phases in the N phases corresponding to the second moment are default values; or,
in a case where a number X of phases measured at the second moment is greater than N, the N phases corresponding to the second moment are N phases selected from the X phases.

28. The method according to claim 25, wherein

in a case where a number X of phases measured at a third moment in the M moments is less than N, (N-X) phases in N phases corresponding to the third moment are default values; or,
in a case where a number X of phases measured at a third moment in the M moments is greater than N, N phases corresponding to the third moment are N phases selected from the X phases.

29. The method according to claim 27 or 28, wherein in the case where the number X of phases is greater than N, the N phases are at least type one of:

phases corresponding to N paths with the strongest energy in the X phases; or
phases corresponding to N paths with the shortest delay in the X phases.

30. The method according to claim 20, wherein
the spectral information of the phase comprises all or part of frequency-domain information acquired by transforming phase information in a time window.

31. The method according to claim 30, wherein the time window is at least one of:

    a first time window stipulated by a communication protocol;
    a second time window configured by the second node, wherein the second node is a receiver node of the sensing information; or
    a third time window configured by a sensing manager node.

32. The method according to claim 20, wherein the pattern information of the phase comprises at least one of:

    a variation period of the phase;
    a variation frequency of the phase; or
    a variation amplitude of the phase.

33. The method according to claim 20, wherein the statistical information of the phase comprises at least one of:

    a statistical distribution of the phase; or
    a proportion of phases reaching a threshold.

34. The method according to any one of claims 19 to 33, wherein the sensing information further comprises at least one of:

    a distance to a target;
    a position of a target;
    an echo energy of a target; or
    a quality of a received signal.

35. The method according to any one of claims 19 to 33, further comprising:
receiving sensing feedback configuration information, wherein the sensing feedback configuration information is used to indicate phase information carried by a first node in transmitting the sensing information.

36. The method according to claim 35, wherein the sensing feedback configuration information further comprises at least one of:

    time window information;
    a number of paths; or
    information indicating whether a spectral coefficient is included.

37. An apparatus for feeding back sensing information, comprising:
a transmitting module, configured to transmit sensing information, wherein the sensing information comprises phase information.

38. An apparatus for feeding back sensing information, comprising:
a receiving module, configured to receive sensing information, wherein the sensing information comprises phase information.

39. A sensing device, comprising:
a transceiver, configured to transmit sensing information, wherein the sensing information comprises phase information.

40. A sensing device, comprising:
a transceiver, configured to receive sensing information, wherein the sensing information comprises phase information.

41. A computer-readable storage medium, storing one or more computer programs, wherein the one or more computer programs, when loaded and run by a processor of a sensing device, cause the sensing device to perform the method for feeding back sensing information as defined in any one of claims 1 to 18 or the method for feeding back sensing information as defined in any one of claims 19 to 36.

42. A chip, comprising: programmable logic circuitry and/or one or more program instructions, wherein the chip, when running, is caused to perform the method for feeding back sensing information as defined in any one of claims 1 to 18 or the method for feeding back sensing information as defined in any one of claims 19 to 36.

43. A computer program product, comprising one or more computer instructions stored in a computer-readable storage medium, wherein the one or more computer instructions, when read from the computer-readable storage medium and executed by a processor of a sensing device, causes the sensing device to perform the method for feeding back sensing information as defined in any one of claims 1 to 18 or the method for feeding back sensing information as defined in any one of claims 19 to 36.

44. A computer program, comprising: one or more computer instructions stored in a computer-readable storage medium, wherein the one or more computer instructions, when read from the computer-readable storage medium and executed by a processor of a sensing device, cause the sensing device to perform the method for feeding back sensing information as defined in any one of claims 1 to 18 or the method for feeding back sensing information as defined in any one of claims 19 to 36.

Mode 1:

Sensing signal

Reflected signal

Sensing transmitter/
receiver base station

Sensing target

Mode 2:

Sensing signal

Reflected signal

Sensing transmitter/
receiver terminal

Sensing target

Mode 3

Sensing
signal

Reflected
signal

Sensing transmitter
base station

Sensing
target

Sensing receiver
base station

Mode 4:

Sensing
signal

Reflected
signal

Sensing transmitter
terminal

Sensing
target

Sensing receiver
terminal

Mode 5:

Sensing
signal

Reflected
signal

Sensing transmitter
base station

Sensing
target

Sensing receiver
terminal

Mode 6:

Sensing
signal

Reflected
signal

Sensing transmitter
terminal

Sensing
target

Sensing receiver
base station

Mode 7

Sensing signal

Sensing transmitter
terminal

Sensing receiver
base station

Mode 8:

Sensing signal

Sensing feedback

Sensing transmitter
base station

Sensing receiver
terminal

FIG. 1

FIG. 2

FIG. 3

FIG. 4

FIG. 5

FIG. 6

Sensing signal receiver node — 10

or

Sensing information

Sensing information

30

Sensing target

Sensing signal

Sensing signal

20

Sensing node 1

20

Sensing node 2

FIG. 7

Transmitting sensing information, wherein the sensing information includes phase information — 220

FIG. 8

First node

Second node

330: Receiving sensing feedback configuration information

340: Transmitting sensing information

FIG. 9

FIG. 10

FIG. 11

420

Receiving sensing information, wherein the sensing information
includes phase information

FIG. 12

520

Transmitting module

540

Receiving module

FIG. 13

620

Receiving module

640

Transmitting module

FIG. 14

Processor 801

Memory 804

Bus 805

Transceiver

Receiver 802

806

Transmitter 803

FIG. 15

## INTERNATIONAL SEARCH REPORT

| International application No. |
|---|
| **PCT/CN2023/107094** |

| A. | CLASSIFICATION OF SUBJECT MATTER |
|---|---|
| | H04W64/00(2009.01)i |

According to International Patent Classification (IPC) or to both national classification and IPC

| B. | FIELDS SEARCHED |
|---|---|

Minimum documentation searched (classification system followed by classification symbols)

IPC:H04W,H04L,H04Q

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 感知, 相位, 信号, 信道, 微运动, 谱系数, 频率分量, 周期, 频次, 幅度, sens+, phase, signal, channel, micro-motion, spectral coefficients, frequency components, period, frequency, amplitude

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 116170097 A (VIVO SOFTWARE TECHNOLOGY CO., LTD.) 26 May 2023 (2023-05-26) description, paragraphs [0122]-[0358] | 1-44 |
| X | CN 116073925 A (VIVO SOFTWARE TECHNOLOGY CO., LTD.) 05 May 2023 (2023-05-05) description, paragraphs [0069]-[0095] | 1-44 |
| X | WO 2023001269 A1 (VIVO MOBILE COMMUNICATION CO., LTD.) 26 January 2023 (2023-01-26) description, paragraphs [0150]-[0246] | 1-44 |
| X | VIVO et al. "Pseudo-CR on Contactless sensing in smart health monitoring" *3GPP TSG-SA WG1 Meeting #98e, S1-221069*, 19 May 2022 (2022-05-19), section 5.1 | 1-44 |
| A | CN 110045370 A (CHENGDU SONGYUAN TECHNOLOGY CO., LTD.) 23 July 2019 (2019-07-23) entire document | 1-44 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 March 2024** | **13 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/107094**

| Patent document cited in search report | | | Publication date (day/month/year) | Patent family member(s) | | | Publication date (day/month/year) |
|---|---|---|---|---|---|---|---|
| CN | 116170097 | A | 26 May 2023 | WO | 2023093646 | A1 | 01 June 2023 |
| CN | 116073925 | A | 05 May 2023 | WO | 2023078297 | A1 | 11 May 2023 |
| WO | 2023001269 | A1 | 26 January 2023 | CN | 115696369 | A | 03 February 2023 |
| CN | 110045370 | A | 23 July 2019 | | None | | |

Form PCT/ISA/210 (patent family annex) (July 2022)